(19)

Europäisches
Patentamt

European
Patent Office

Office européen
des brevets

(11) **EP 2 592 764 B1**

(12) **EUROPEAN PATENT SPECIFICATION**

(45) Date of publication and mention
of the grant of the patent:
**19.03.2014 Bulletin 2014/12**

(51) Int Cl.:
***H04B 7/06*** (2006.01)

(21) Application number: **11306477.8**

(22) Date of filing: **14.11.2011**

(54) **Method for optimizing radio link transmission in a radio communication system, transmission unit, selection unit, network node, and apparatus thereof**

Verfahren zur Optimierung der Funkverbindungsübertragung in einem Funkkommunikationssystem, Übertragungseinheit, Auswahleinheit, Netzwerkknoten und Vorrichtung dafür

Procédé pour optimiser la transmission de la liaison radio dans un système de communication radio, unité de transmission, unité de sélection, noeud de réseau et appareil correspondant

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.05.2013 Bulletin 2013/20**

(73) Proprietor: **Alcatel Lucent
75007 Paris (FR)**

(72) Inventor: **Hoek, Cornelis
71732 Tamm (DE)**

(74) Representative: **Wetzel, Emmanuelle et al
Alcatel-Lucent Deutschland AG
Intellectual Property & Corporate Standards
Lorenzstrasse 10
70435 Stuttgart (DE)**

(56) References cited:
**EP-A1- 1 909 407         WO-A1-2008/147121
WO-A2-2008/116181     WO-A2-2010/124252
US-A1- 2010 172 256   US-A1- 2011 032 839
US-A1- 2011 274 188**

**Description**

**FIELD OF THE INVENTION**

The invention relates to radio communication and, more particularly but not exclusively, to optimization processes for radio communication.

**BACKGROUND**

Modern cellular radio communication systems, like the 3GPP LTE system (3GPP = Third Generation Partnership Project, LTE = Long-Term Evolution), rely on MIMO antenna techniques (MIMO = Multiple Input Multiple Output) in order to achieve high spectral efficiency.
MIMO allows an application of a codebook-based beam-forming. Thereby, a base station selects for a mobile station one pre-coding vector from a set of predefined pre-coding vectors of a codebook. The selection of the pre-coding vector may be based on a transmission of a feedback report from the mobile station to the base station, which indicates for example a recommended pre-coding vector.
The mobile station is able to propose the recommended pre-coding vector based on a reception of reference signals, which have been transmitted from the base station by applying antenna weights of different pre-coding vectors to antenna elements of an antenna array, and based on a determination of quality indicators such as SINR values (SINR = signal to interference and noise ratio) for the different pre-coding vectors.
US 2010/0172256 A1 describes techniques for using multiple description codes (MDC) for channel feedback to improve channel estimation accuracy. A receiver obtains an initial/measured channel vector for a communication channel, selects a codebook and a channel vector of the selected codebook in a set of codebooks for quantizing the initial channel vector and send the selected channel vector and possibly the selected codebook to a transmitter.
WO 2008/147121 A1 describes a method for feedback and transmission of multi-user multiple input multiple output in a wireless communication system. The method includes steps of selecting subset codebook or full code book based on traffic load of a base station and broadcasting the selected codebook to user equipments. The user equipments calculate a channel quality indicator of a spatial codeword vector that is included in the selected codebook and send information of a maximum channel quality indicator to the base station.
EP 1 909 407 A1 describes a base station and method for performing precoding in a wireless communication system. The base station includes a plurality of codebooks and a codebook selector. Each codebook comprises a plurality of composite precoding matrices that are generated based on a corresponding diversity precoding matrix. The codebook selector is operable to select one of the codebooks for use in a communication session with a subscriber station.
WO 2008/116181 A2 describes a variable codebook for a MIMO system. The size of the codebook is determined by the quality of the wireless transmission channel between a transmitter and a receiver.
US 2011/0032839 A1 discloses a transmission of either one, two, or more transmission layers by a base station. A user equipment receives a reference symbol from the base station, processes the reference symbol with one or more of a plurality of precoding matrices to form a plurality of channel quality indices (CQI) and provides feedback to the base station comprising one or more feedback CQI selected from the plurality of CQI and one or more precoding matrix indicators (PMI).
WO 2010/124252 A2 describes a technique for signalling rank and precoding indications in uplink and downlink MIMO operations using codebook and non-codebook based precoding.
US 2011/0274188 A1 discloses a method for two component feedback in wireless communication systems. A wireless communication device sends a first representation of a first matrix chosen from a first codebook, wherein the first matrix has at least two columns, and sends a second representation of a second matrix chosen from a second codebook. The base station obtains a precoder from the first representation and the second representation.

**SUMMARY**

The way of performing the feedback by the mobile station and of applying the pre-coding vectors by the base station has an impact on an overall data throughput on an air interface between the base station and connected mobile stations.
Therefore, it is an object of the invention to increase and optimize the overall data throughput of the air interface.
The object is achieved by a method for optimizing radio link transmission in a radio communication system. The method comprises the steps of transmitting at least one predefined radio frequency signal successively from a first one and a second one of at least two antenna elements of at least one antenna array to a receiving unitof an apparatus, receiving at the receiving unit at least one first radio signal for the at least one predefined radio frequency signal transmitted via the first one of the at least two antenna elements, receiving at the receiving unit at least one second radio signal for the at least one predefined radio frequency signal transmitted via the at least second one of the at least two antenna elements, transmitting the at least one predefined radio frequency signal by applying successively at least two pre-coding vectors of at least one codebook to the first one and the second one of the at least two antenna elements to the receiving unit, receiving at the receiving unit at least one third radio signal for the at least one predefined radio frequency signal transmitted via a first one of the at least two pre-coding vectors, receiving at the receiving unit at least one fourth radio signal for the at least one predefined radio frequency signal transmitted via at least a second one of the at least two pre-coding vectors, providing the received first radio signals, the received at least second radio signals, the received at least one third radio signal and the received at least one fourth radio signal from the receiving unit to an selection unit of the apparatus, selecting at the selection unit at least one transmission configuration of at least two transmission configurations based on the received first radio signals, the received at least second radio signals, the received at least one third radio signal, the received at least one fourth radio signal and the at least one predefined radio frequency signal, and providing from the selection unit the selected at least one transmission configuration to a transmission unit of the at least one antenna array.

The object is further achieved by a transmission unit and by an apparatus for analyzing radio link communication, which comprises the selection unit. A network node may be for example a mobile station, a base station of a radio access network, an access point of a WLAN (WLAN = Wireless Local Area Network) or a network node of a further network connected to a network that comprises the antenna array. The further network may be based for example on cloud computing with a functionality that the selecting step is distributed for example across several network servers of the further network.

The method offers a first benefit of allowing for an adaptation of the transmission configurations with an improved accuracy to current characteristics of a transmission path for radio frequency signals from the antenna array to the receiving unit, because the selection unit has a full knowledge of received radio signals at a specific time in a predefined frequency range. In a conventional radio communication system, the mobile stations only report a preferred pre-coding vector and preferably a CQI value (CQI = channel quality indicator), which has been averaged across several frequency subcarriers and several time slots. By this averaging, many detailed information of the received signals for the transmission path from the antenna array to the receiving unit has been lost.

The method provides a second benefit of evaluating different transmission configurations such as the at least one codebook and at least one further codebook for selecting a preferred codebook. In an alternative, the evaluation may be used for selecting several pre-coding vectors for generating a new codebook. This automatic process does not require any intervention for example per remote by an employee of a company, which operates the radio communication system. In a conventional radio communication system, the base station selects pre-coding vectors only from a single codebook, which may be changed only during a manual reconfiguration of the base station.

The method further offers the advantage of a reduced interference level and/or reduced noise level in comparison of applying only the received first radio signals and the received at least second radio signals. Preferably, the method further comprises the step of applying the predefined radio frequency signals to radio resource units in a predefined frequency range. This provides the benefit of reserving a part of a spectral range in a radio cell for the optimization method without impact on remaining parts of the spectral range of the radio cell, which can be used for conventional communication between the antenna array of the transmission unit and the receiving unit.

According to two alternative embodiments, same predefined radio frequency signals may be applied to the radio resource units or a first type of predefined radio frequency signals is applied to a first group of radio resource units and at least one second type of predefined radio frequency signals is applied to at least one second group of radio resource units. Using different types of predefined radio frequency signals for the different groups of radio resource units can support a synchronization of the receiving unit to a received frame.

In a further preferred embodiment, the predefined radio frequency signals may be periodically applied to all radio resource units of the predefined frequency range for a predefined time. Thereby, many reference signals can be transmitted to the receiving unit, which allows for an even increased accuracy of the optimization method, because any statistical effects due to noise and fast fading effects may be eliminated or reduced as far as possible.

According to an even further preferred embodiment, the received signals are provided in a form of baseband I/Q samples from the receiving unit to the selection unit.

According to two further alternative embodiments, either the received first radio signals and the received at least radio second signals and preferably the received third radio signals and the received at least fourth radio signals are provided instantaneously from the receiving unit to the selection unit for example via a radio link or the received first radio signals and the received at least second radio signals and preferably the received third radio signals and the received at least fourth radio signals are provided collectively at a later point of time from the receiving unit to the selection unit for example by following sub-steps: buffering the received first radio signals and the received at least second radio signals and preferably the received third radio signals and the received at least fourth radio signals at the receiving unit, connecting the receiving unit to the selection unit, and transmitting the buffered and received radio signals from the receiving unit to the transmission unit. The first alternative enables a real time data provision of the received radio signal to the selection unit and a real time optimization at the selection unit.

The second alternative allows for example to collect data of the received radio signals at the receiving unit such as a mobile station, which performs measurements at various locations and by various velocities within the radio cell belonging to the antenna array, and to transfer at a later point of time the collected data to the selection unit for example via a connected data cable after finishing the measurements. Thereby, an offline evaluation of the transmission configurations is possible.

Preferably, the method may further comprise the steps of providing location information and/or velocity information for the receiving steps from the receiving unit to the selection unit, and providing from the selection unit the location information and/or the velocity information for the selected at least one transmission configuration to the transmission unit. These additional technical features allow for a location-based and/or velocity-based application of transmission configurations at the transmission unit. According to a further preferred embodiment, the method further comprises the steps of receiving a first part of the predefined radio frequency signal on a first transmission line from the transmission unit to the first one of the at least two antenna elements near the first one of the at least two antenna elements, measuring at least one second part of the predefined radio frequency signal on at least one second transmission line from the transmission unit to the at least second one of the at least two antenna elements near the at least second one of the at least two antenna elements, and providing the measured first part and the measured at least second part of the predefined radio frequency signal to the transmission unit, for calibrating the predefined radio frequency signals in advance of further transmissions of the predefined radio frequency signals. Thereby, a directional coupler or a calibration network may be placed preferably at the end of the first and the at least second one transmission line with a first output towards one of the antenna elements and a second output towards the transmission unit. This set-up can be used to detect varying attenuation values of the transmission lines for the predefined radio frequency signal due to for example different lengths of the transmission lines. The different attenuation values provide knowledge of real amplitude values of the predefined radio frequency signals, which are transmitted by the various antenna elements. This knowledge can be used to further optimize the evaluation step at the selection unit.

Further advantageous features of the invention are defined and are described in the following detailed description of the invention.

## BRIEF DESCRIPTION OF THE FIGURES

The embodiments of the invention will become apparent in the following detailed description and will be illustrated by accompanying figures given by way of non-limiting illustrations.

Figure 1 shows schematically a radio communication system with a base station comprising a selection unit and transmitting predefined radio frequency signals and two mobile stations receiving the predefined radio frequency signals and reporting received radio signals according to a first embodiment.

Figure 2 shows schematically a radio communication system with a first base station comprising a selection unit and transmitting predefined radio frequency signals, a second base station transmitting predefined radio frequency signals and a single mobile station receiving the predefined radio frequency signals and reporting received radio signals according to a second embodiment.

Figure 3 shows schematically a radio communication system with a first base station transmitting predefined radio frequency signals, a second base station transmitting predefined radio frequency signals, a single mobile station receiving the predefined radio frequency signals and reporting received radio signals and a network with a network server comprising an selection unit according to a third embodiment.

Figure 4 shows schematically a radio communication system with a base station transmitting predefined radio frequency signals, a mobile station receiving the predefined radio frequency signals and comprising an selection unit and an apparatus for analyzing radio link communication comprising an selection unit according to a fourth embodiment and a fifth embodiment.

Figures 5a and 5b show schematically a flow diagram of a method in accordance to the embodiments of the invention.

Figure 6 shows schematically a radio resource block with an arrangement of predefined radio frequency signal according to the embodiments of the invention.

Figure 7 shows schematically a block diagram of a selection unit according to the embodiments of the invention.

Figure 8 shows schematically a block diagram of a transmission unit according to the embodiments of the invention.

## DESCRIPTION OF THE EMBODIMENTS

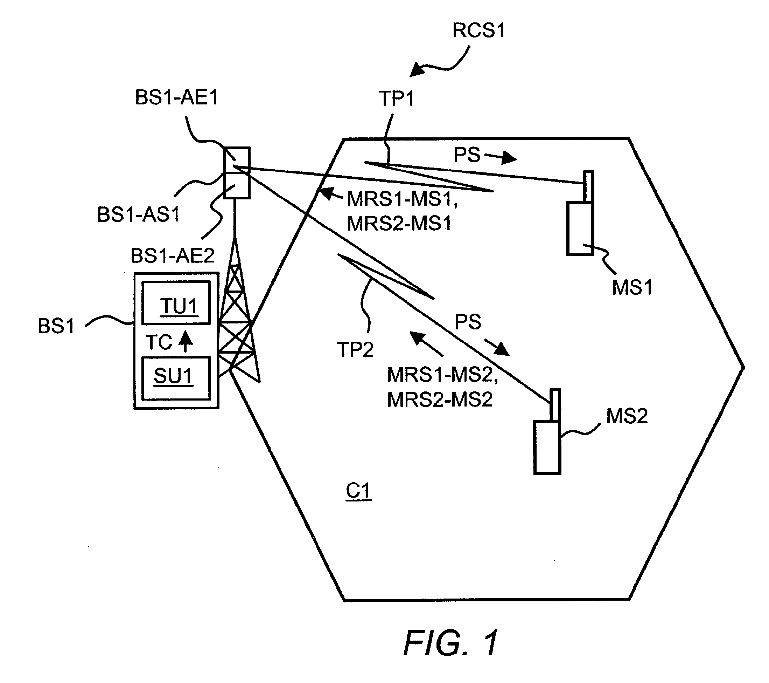

Figure 1 shows schematically a radio communication system RCS1, which comprises exemplarily a base station BS1, a first mobile station MS1 and a second mobile station MS2. Further base stations, further mobile stations and other network nodes of the radio communication system RCS1 are not shown for simplification.

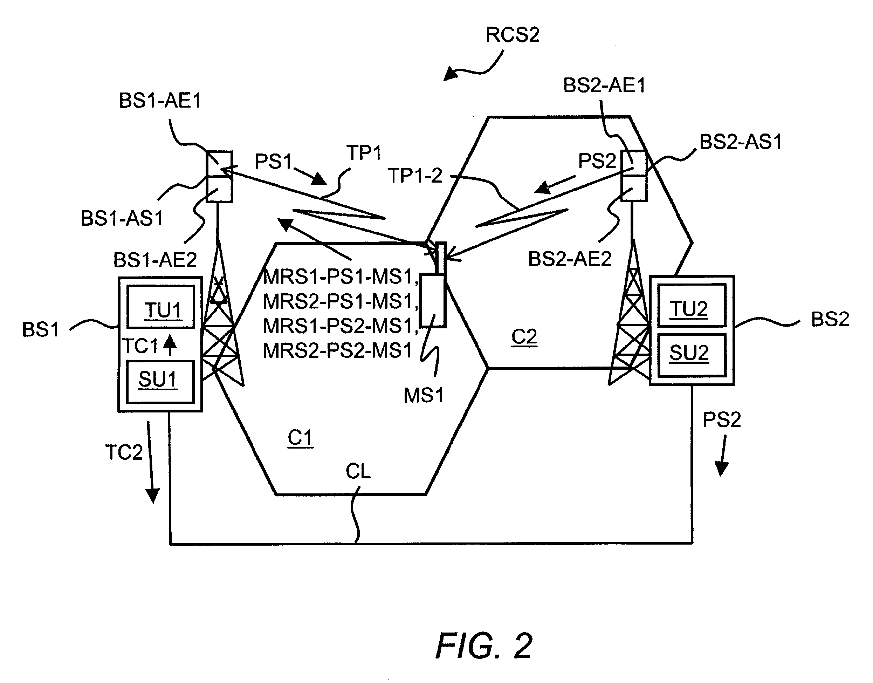

The radio communication system RCS1 and further radio communication systems RCS2, RCS3, and RCS4 as shown on Figures 2, 3 and 4 may be for example WLANs (WLAN = wireless local area network) such as defined by IEEE 802.11 standards, WiMAX networks (WiMAX = Worldwide Interoperability for Microwave Access) such as one of the IEEE 802.16 family of wireless-networks standards ratified by the WiMAX Forum or LTE access networks (LTE = Long Term Evolution) such as defined by 3GPP (3GPP = Third Generation Partnership Project).

The term "base station" may be considered synonymous to and/or referred to as a base transceiver station, access point base station, access point, macrocell, microcell, femtocell, picocell etc. and may describe equipment that provides wireless connectivity via one or more radio links to one or more mobile stations. The base station BS1 may be for example an LTE Node B, an IEEE 802.1 access point, a WiMAX base station etc.

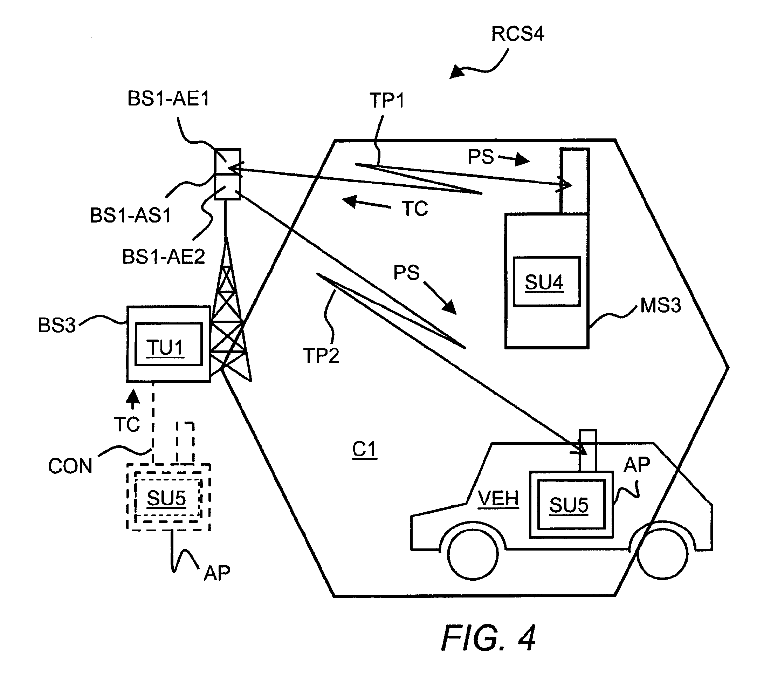

The term "mobile station" may be considered synonymous to, and may hereafter be occasionally referred to, as a mobile unit, mobile user, access terminal, user equipment, subscriber, user, remote station etc. The first mobile station MS1, the second mobile station MS2 and a further mobile station (see Figure 4) may be for example a cellular telephone, an LTE smart phone, a portable computer such as a notebook with a WLAN and/or an LTE interface card, a USB data stick with a WLAN and/or an LTE interface, a pocket computer, a hand-held computer, a personal digital assistant, or an integrated circuit, which can be implemented in any portable device or vehicle etc.

The base station BS1 comprises exemplarily an antenna system AS1-BS1 for providing wireless coverage for a radio cell C1. The antenna system AS1-BS1 may be an active or passive antenna array, may be mounted for example on an antenna mast and exemplarily comprises two antenna elements BS1-AE1, BS1-AE2 vertically stacked to form the array. Alternatively, the antenna system AS1-BS1 may comprise four antenna elements in a single row or column or in an array of two rows and two columns or more than four antenna elements. According to further alternatives, the base station BS1 may comprise more antenna systems for providing wireless coverage for further radio cells.

The term "radio cell" may be considered synonymous to, and may hereafter be occasionally referred to, as a cell, sector, or radio sector.

The first mobile station MS1 and the second mobile station MS2 are located within the radio cell C1.

The base station BS1 further comprises a transmission unit TU1 for transmitting predefined radio frequency signals PS successively from the antenna elements BS1-AE1, BS1-AE2 of the antenna system BS1-AS1 and via a first transmission path TP1 to the first mobile station MS1 and via a second transmission path TP2 to the second mobile station MS2. The transmission unit TU1 may be part of a well-known radio transceiver.

The first mobile station MS1 receives the predefined radio frequency signals PS transmitted via the first antenna element BS1-AE1 and converts the received predefined radio frequency signals PS for example into well-known baseband I/Q samples MRS1-MS1 by multiplying the received predefined radio frequency signals PS with a chosen frequency of a local oscillator and a first phase for getting I samples and by multiplying the received predefined radio frequency signals PS with the frequency and a second phase, that has a phase shift of 90 degree with respect to the first phase, for getting Q samples. Preferably, the baseband I/Q samples are converted into digital values.

Similarly, the first mobile station MS1 receives the predefined radio frequency signals PS transmitted via the second antenna element BS1-AE2 and converts in a similar way as described above the received predefined radio frequency signals PS into well-known baseband I/Q samples MRS2-MS1.

The second mobile station MS2 receives in a similar way the predefined radio frequency signals PS transmitted via the first antenna element BS1-AE1 and converts in a similar way as described above the received predefined radio frequency signals PS into well-known baseband I/Q samples MRS1-MS2 and receives the predefined radio frequency signals PS transmitted via the second antenna element BS1-AE2 and converts in a similar way as described above the received predefined radio frequency signals PS into well-known baseband I/Q samples MRS2-MS2.

The first mobile station MS1 provides preferably immediately the baseband I/Q samples MRS1-MS1, MRS2-MS1 via an uplink channel to the base station BS1. The transmission of the digital values may be done for examply by applying a specific uplink signalling channel or by applying one or several dedicated user plane channels.

Similar, the second mobile station MS2 provides preferably immediately the baseband I/Q samples MRS1-MS2, MRS2-MS2 via the uplink channel or a further uplink channel to the base station BS1.

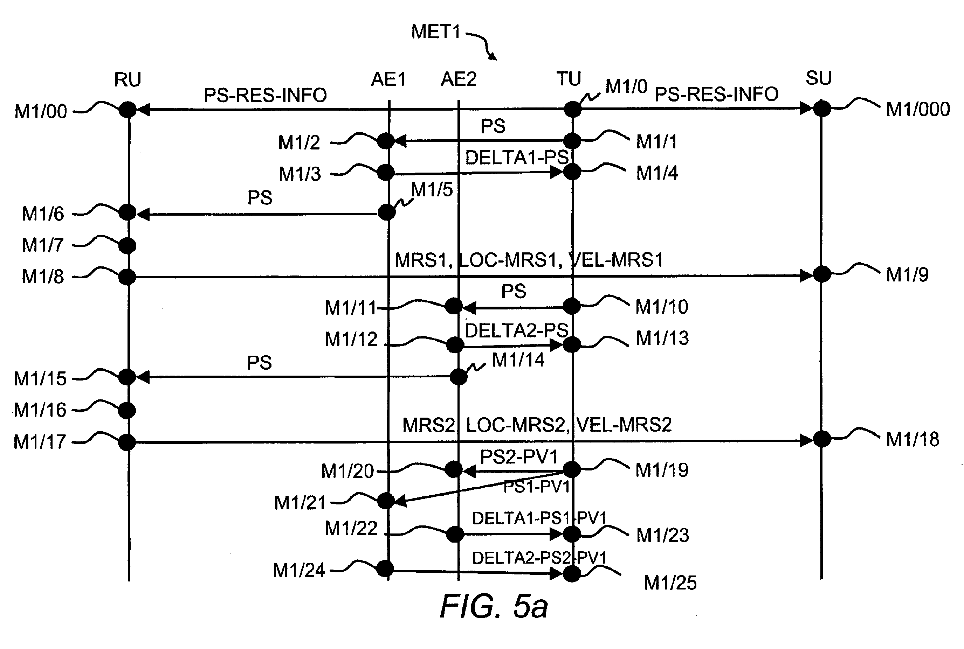

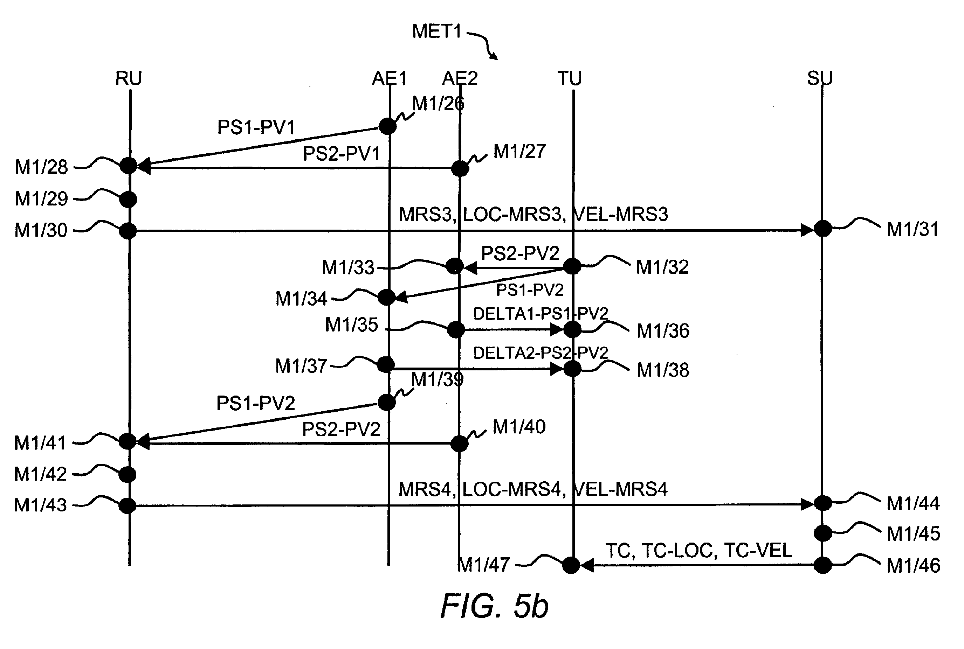

A further alternative for receiving and converting the predefined radio frequency signals PS at the first mobile station MS1 and the second mobile station MS2 is provided with respect to Figures 5a/5b and corresponding description.

The base station BS1 further comprises a selection unit SU1. The baseband I/Q samples MRS1-MS1, MRS2-MS1 from the first mobile station MS1 and the baseband I/Q samples MRS1-MS2, MRS2-MS2 from the second mobile station MS2 received at the antenna system BS1-AS1 are provided to the selection unit SU1. The selection unit SU1 selects a transmission configuration TC for the transmission unit TU1 from a set of two or more transmission configurations based on the received baseband I/Q samples MRS1-MS1, MRS2-MS1, MRS1-MS2, MRS2-MS2 and the predefined radio frequency signals PS.

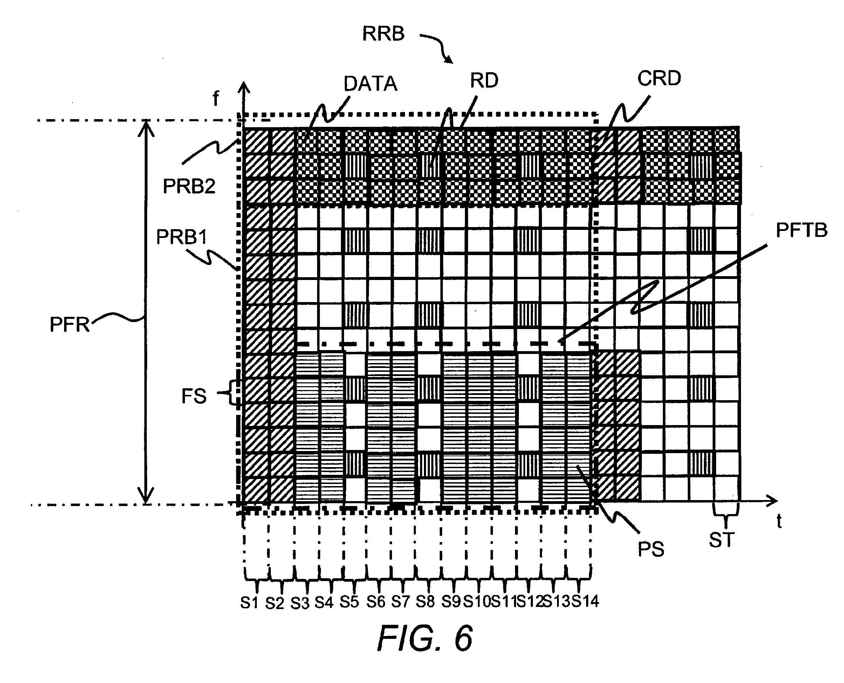

The transmission configurations may be for example two or more codebooks, which comprise two or more pre-coding vectors. In an alternative, the transmission configurations may be two or more pre-coding vectors, which are evaluated to generate a new preferred codebookThe selection process is described in more detail with respect to Figures 5a/6b and corresponding description.

According to further alternatives, the selection unit SU1 bases the selection only on baseband I/Q samples of one of the mobile station MS1, MS2 or on baseband I/Q samples of the mobile stations MS1, MS2 and further mobile stations.

The selection unit SU1 provides the selected transmission configuration TC to the transmission unit TU1, which may exchange a currently used transmission configuration with the selected transmission configuration TC for optimizing radio link transmission towards the first mobile station MS1 and/or the second mobile station MS2.

Figure 2 shows schematically a radio communication system RCS2, which comprises exemplarily the base station BS1, a further base station BS2, and the first mobile station MS1. Further base stations, further mobile stations and other network nodes of the radio communication system RCS2 are not shown for simplification. The elements in Figure 2 that correspond to elements of Figure 1 have been designated by same reference numerals. The further base station BS2 comprises exemplarily an antenna system BS2-AS1 for providing wireless coverage for a further radio cell C2, which is located next to the radio cell C1. This means, the radio cells C1, C2 may be neighbouring radio cells.

The antenna system BS2-AS1 may be an active or passive antenna array, may be mounted for example on a further antenna mast and exemplarily comprises two antenna elements BS2-AE1, BS2-AE2 vertically stacked to form the array. Alternatively, the antenna system BS2-AS1 may comprise four antenna elements in a single row or column or in an array of two rows and two columns or more than four antenna elements. According to further alternatives, the further base station BS2 may comprise more antenna systems for providing wireless coverage for further radio cells.

The base station BS1 may be connected to the further base station BS2 by a communication link CL. The communication link CL may be for example an X2 interface such as specified for 3GPP LTE radio communication networks. The first mobile station MS1 may be located within the radio cell C1.

The base station BS1 transmits predefined radio frequency signals PS1 successively from the antenna elements BS1-AE1, BS1-AE2 of the antenna system BS1-AS1 and via the first transmission path TP1 to the first mobile station MS1. Similarly to the base station BS1, the base station BS2 further comprises a transmission unit TU2 for transmitting further predefined radio frequency signals PS2 successively from the antenna elements BS2-AE1, BS2-AE2 of the antenna system BS2-AS1 and via a further transmission path TP1-2 to the first mobile station MS1 and further comprises a selection unit SU2. The transmission unit TU2 may be part of a further conventional radio transceiver.

There exist several possibilities for a transmission of the predefined radio frequency signals PS1 and the further predefined radio frequency signals PS2 to the first mobile station MS1 by using a predefined radio resource block such as applied for example in 3GPP LTE, which may comprise a predefined number of adjacent subcarriers and a predefined number of time slots for the predefined radio frequency signals PS1, PS2:

According to a first alternative, if the base station BS1 and the further base station BS2 are synchronized to each other, the base station BS1 may transmit the predefined radio frequency signals PS1 at every odd time slot (e.g. 1., 3., 5....) of the predefined number of time slots and at every subcarrier of the predefined number of adjacent subcarriers and the further base station BS2 may transmit the further predefined radio frequency signals PS2 at every even time slot (e.g. 2., 4., 6....) of the predefined number of time slots and also at every subcarrier of the predefined number of adjacent subcarriers.

According to a second alternative, the base station BS1 may transmit the predefined radio frequency signals PS1 at all time slots of the predefined number of time slots and at every odd subcarrier (e.g. 1., 3., 5....) of the predefined number of adjacent subcarriers and the further base station BS2 may transmit the further predefined radio frequency signals PS2 also at all time slots of the predefined number of time slots and at every even subcarrier (e.g. 2., 4., 6....) of the predefined number of adjacent subcarriers.

According to a third alternative, the base station BS1 may transmit the predefined radio frequency signals PS1 at all time slots of the predefined number of time slots and at all subcarriers of the predefined number of adjacent subcarriers by applying a first coding such as time division multiple access (TDMA), frequency division multiple access (FDMA), code division multiple access (CDMA) or a combination two or all three coding schemes and the further base station BS2 may transmit the further predefined radio frequency signals PS2 also at all time slots of the predefined number of time slots NSLOT and also at all subcarriers of the predefined number of adjacent subcarriers NSUBC by applying a second coding such as time division multiple access (TDMA), frequency division multiple access (FDMA), code division multiple access (CDMA) or a combination two or all three coding schemes.

According to a preferred alternative, the selection unit SU1 has knowledge, how the further predefined radio frequency signals PS2 are transmitted from the antenna elements BS2-AE1, BS2-AE2 of the antenna system BS2-AS1. This means, the selection unit SU1 may know the structure and coding of the predefined predefined radio frequency signals PS2 and may know, whether the further predefined radio frequency signals PS2 are transmitted from a single antenna element of the antenna system BS2-AS1 or are transmitted by applying a pre-coding vector.

According to a first alternative, the selection unit SU1 may have knowledge of the further predefined radio frequency signals PS2 from the further base station BS2 for example by receiving this information from an O&M network node (O&M = operation and maintenance).

Alternatively, the further base station BS2 may transmit information such as shown in Figure 5a (see steps M1/0 and M1/000) of the further predefined radio frequency signals PS2 currently transmitted by the antenna system BS2-AS1 via the communication link CL to the base station BS1.

The first mobile station MS1 receives the predefined radio frequency signals PS1 transmitted via the first antenna element BS1-AE1 of the antenna system BS1 -AS1 and converts the received predefined radio frequency signals PS into well-known baseband I/Q samples MRS1-PS1-MS1 as described above regarding Figure 1.

Similarly, the first mobile station MS1 receives the predefined radio frequency signals PS1 transmitted via the second antenna element BS1-AE2 of the antenna system BS1-AS1 and converts the received predefined radio frequency signals PS into well-known baseband I/Q samples MRS2-PS1-MS1.

The first mobile station MS1 further receives in a similar way as described above the predefined radio frequency signals PS2 transmitted via the first antenna element BS2-AE1 of the antenna system BS2-AS1 and converts the received predefined radio frequency signals PS2 into well-known baseband I/Q samples MRS1-PS2-MS1 and receives the predefined radio frequency signals PS2 transmitted via the second antenna element BS2-AE2 of the antenna system BS2-AS1 and converts the received predefined radio frequency signals PS2 into well-known baseband I/Q samples MRS2-PS2-MS1.

The first mobile station MS1 provides preferably immediately the baseband I/Q samples MRS1-PS1-MS1, MRS2-PS1-MS1, MRS1-PS2-MS1, MRS2-PS2-MS1 via the uplink channel to the base station BS1.

The baseband I/Q samples MRS1-PS1-MS1, MRS2-PS1-MS1, MRS1-PS2-MS1, MRS2-PS2-MS1 from the first mobile station MS1 received at the antenna system BS1-AS1 are provided to the selection unit SU1. The selection unit SU1 may select a transmission configuration TC1 for the transmission unit TU1 and preferably a further transmission configuration TC2 for the transmission unit TU2 from a set of two or more transmission configurations based on the received baseband I/Q samples MRS1-PS1-MS1, MRS2-PS1-MS1, MRS1-PS2-MS1, MRS2-PS2-MS1 and the predefined radio frequency signals PS1 and the further predefined radio frequency signals PS2. According to further alternatives, the selection unit SU1 bases the selection on baseband I/Q samples of the first mobile station MS1 and further mobile stations.

The selection unit SU1 provides the selected transmission configuration TC1 to the transmission unit TU1, which may exchange a currently used transmission configuration with the selected transmission configuration TC1 for optimizing radio link transmission towards the first mobile station MS1. The selection unit SU1 may further provide a further selected transmission configuration TC2 to the transmission unit TU2 of the further base station BS2 via the communication link CL, which may exchange a currently used transmission configuration with the further selected transmission configuration TC2 for optimizing radio link transmission towards mobile stations located with the further radio cell C2 at the border towards the radio cell C1.

The selection unit SU2 of the further base station BS2 may be applied for a similar further selection process (not shown and described for simplification) with regard to mobile stations located within the further radio cell C2.

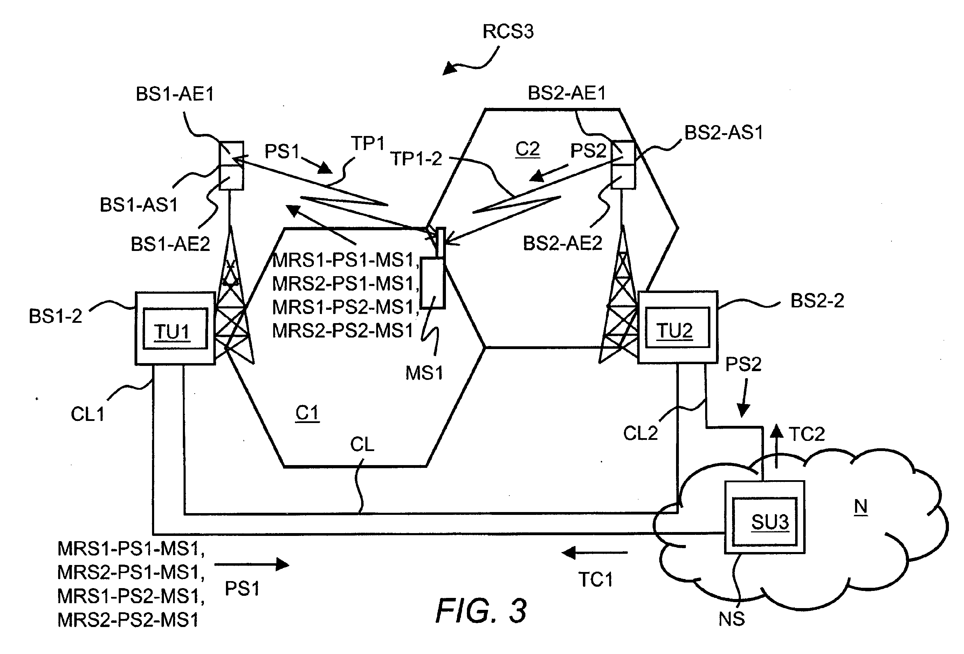

Figure 3 shows schematically a radio communication system RCS3, which comprises exemplarily the base station BS1, the further base station BS2, the first mobile station MS1 and shows a further network N, which comprises a network server NS. Further base stations, further mobile stations and other network nodes of the radio communication system RCS3 and further network servers or further network nodes of the further network N are not shown for simplification. The elements in Figure 3 that correspond to elements of Figure 2 have been designated by same reference numerals.

The further network N may be for example based on cloud computing by sharing for example resources, software, and information between different operators that own different radio access networks.

The network server NS comprises a selection unit SU3 for selecting transmission configurations for a base station BS1-2 and/or a further base station BS2-2.

According to an alternative, the further network N may be a core network of a cellular mobile radio network.

According to a further alternative, a radio access network, which comprises the base station BS1-2 and the further base station BS2-2, further comprises the network server NS. The further network N is not required in such a case. The base station BS1-2 is connected to the network server NS via a further communication link CL1 and the further base station BS2-2 is connected to the network server NS via an even further communication link CL2.

The communication links CL1, CL2 may be based for example on an S1 interfaces as applied in 3GPP LTE if the further network N is a core network of a cellular mobile radio network or on IPv4 (IPv4 = Internet Protocol version 5) or IPv6 (IPv6 = Internet Protocol version 6) links, if the further network N is an external network.

Contrary to Figure 2, instead of the base station BS1-2 and the further base station BS2-2 the network server NS comprises a selection unit SU3 with similar functionality as described above for the selection units SU1, SU2 according to Figure 1 and Figure 2.

According to a preferred alternative, the selection unit SU3 has knowledge, how the predefined radio frequency signals PS1 and the further predefined radio frequency signals PS2 are transmitted from the antenna systems BS1-AS1, BS2-AS1. This means, the selection unit SU3 may know the structure and coding of the predefined predefined radio frequency signals PS1 and the further predefined radio frequency signals PS2 and may know, whether the predefined radio frequency signals PS1 and the further predefined radio frequency signals PS2 are transmitted from a single antenna element of the antenna systems BS1-AS1, BS2-AS1 or are transmitted by applying a pre-coding vector.

Alternatively, the base station BS1-2 transmits information of the predefined radio frequency signals PS1 via the further communication link CL1 to the network server NS and the further base station BS2-2 further transmits further information of the further predefined radio frequency signals PS2 via the even further communication link CL2 to the network server NS2.

The baseband I/Q samples MRS1-PS1-MS1, MRS2-PS1-MS1, MRS1-PS2-MS1 MRS2-PS2-MS1 from the first mobile station MS1 received at the antenna system BS1-AS1 are provided by the base station BS1-2 to the selection unit SU3 of the network server NS via the further communication link CL1. The selection unit SU3 may select a transmission configuration TC1 for the transmission unit TU1 of the base station BS1-2 and preferably a further transmission configuration TC2 for the transmission unit TU2 of the further base station BS2-2 from a set of two or more transmission configurations based on the received baseband I/Q samples MRS1-PS1-MS1, MRS2-PS1-MS1, MRS1-PS2-MS1, MRS2-PS2-MS1 and the received predefined radio frequency signals PS1, PS2.

Figure 4 shows schematically a radio communication system RCS4, which comprises exemplarily a base station BS3, a mobile station MS3 and/or an apparatus AP, which may be located for example in a vehicle VEH such as a car. Further base stations, further mobile stations and other network nodes of the radio communication system RCS4 are not shown for simplification. The elements in Figure 4 that correspond to elements of Figure 1 have been designated by same reference numerals.

Contrary to Figure 1, a base station BS3 comprises the antenna system BS1-AS1 but may not comprise a selection unit. Instead of the base station BS3 the mobile station MS3 comprises a selection unit SU4 with similar functionality as described above for the selection units SU1, SU2 according to Figure 1 and Figure 2.

The mobile station MS3 receives the predefined radio frequency signals PS transmitted via the first antenna element BS1-AE1 and converts the received predefined radio frequency signals PS into well-known baseband I/Q samples MRS1-MS1. Similarly, the mobile station MS3 receives the predefined radio frequency signals PS transmitted via the second antenna element BS1-AE2 and converts similarly the received predefined radio frequency signals PS into well-known baseband I/Q samples MRS2-MS1. The mobile station MS3 internally provides preferably immediately the baseband I/Q samples MRS1-MS1, MRS2-MS1 to the selection unit SU4. The selection unit SU4 selects a transmission configuration TC for the transmission unit TU1 from a set of two or more transmission configurations based on the received baseband I/Q samples MRS1-MS1, MRS2-MS1 and knowledge of the predefined radio frequency signals PS as transmitted by the base station BS3.

The mobile station MS3 provides the selected transmission configuration TC via an uplink channel to the transmission unit TU1 of the base station BS3, which may exchange a currently used transmission configuration with the selected transmission configuration TC for optimizing radio link transmission towards the mobile station MS3.

According to an alternative, instead of the base station BS3 the apparatus AP comprises a selection unit SU5 with similar functionality as the selection units SU1, SU2 according to Figure 1 and Figure 2.

The apparatus AP may be for example a wireless measurement equipment, a wireless test equipment, or a radio network scanner. The radio network scanner provides for example a digital I/Q interface and enables RF measurements in block and/or continuous streaming mode.

The apparatus AP receives for example by an external antenna mounted on the vehicle VEH the predefined radio frequency signals PS transmitted via the first antenna element BS1-AE1 and converts the received predefined radio frequency signals PS into well-known baseband I/Q samples MRS1 - MS1. Similarly, the apparatus AP receives the predefined radio frequency signals PS transmitted via the second antenna element BS1-AE2 and converts similarly the received predefined radio frequency signals PS into well-known baseband I/Q samples MRS2-MS1.

The apparatus AP internally provides preferably immediately the baseband I/Q samples MRS1-MS1, MRS2-MS1 to the selection unit SU5.

The selection unit SU5 selects a transmission configuration TC for the transmission unit TU1 from a set of two or more transmission configurations based on the received baseband I/Q samples MRS1-MS1, MRS2-MS1 and knowledge of the predefined radio frequency signals PS as transmitted by the base station BS3.

The selection unit SU5 may store the transmission configuration TC for a later data transfer.

The selection unit SU5 preferably may further comprise a GPS receiver for being able to store the selected transmission configuration TC in a database together with a mapping to a current location of the vehicle and a current velocity of the vehicle.

If the measurement and selection process is performed and finished, the apparatus AP may be connected for example by a fixed connection CON with the base station BS3 and the selected transmission configuration TC is transmitted and transferred to the transmission unit TU1 of the base station BS3 (indicated by dashed lines in Figure 4).

Referring to Figure 5a and Figure 5b a flow diagram of a method MET1 in accordance to several embodiments of the invention is shown. The number of the steps for performing the method MET1 is not critical, and as can be understood by those skilled in the art, that the number of the steps and the sequence of the steps may vary without departing from the scope of the present invention as defined in the appended claims, e.g. some of the steps may be performed simultaneously (e.g. steps M1/26, M1/27), some of the steps may be alternative steps (e.g. steps M1/0 and M1/00), or some of the steps may be ignored (e.g. steps M1/19 to M1/44).

The method MET1 may be executed by a receiving unit RU, by a first antenna element AE1, by a second antenna element AE2, by a transmission unit TU, and by a selection unit SU.

The receiving unit RU may be for example part of the first mobile station MS1 (see Figures 1, 2 and 3), the second mobile station MS2 (see Figure 1), the mobile station MS3 (see Figure 4) or the apparatus AP (see Figure 4).

The first antenna element AE1 of an antenna system may be for example the antenna element BS1-AE1 or the antenna element BS2-AE1.

The second antenna element AE2 of the antenna system may be for example the antenna element BS1-AE2 or the antenna element BS2-AE2. The transmission unit TU may be for example the first transmission unit TU1 (see Figures 1 to 4) or the second transmission unit TU2 (see Figures 2 and 3).

The selection unit SU may be for example the first selection unit SU1 (see Figures 1 and 2), the second selection unit SU2 (see Figure 2), the third selection unit SU3 (see Figure 3), the fourth selection unit SU4 (see Figure 4) or the fifth selection unit SU5 (see Figure 4).

The method MET1 is described with respect to the receiving unit RU, the first antenna element AE1, the second antenna element AE2, the transmission unit TU, and the selection unit SU. For a person skilled in the art it is clear, that the method MET1 may be extended with respect to further receiving units, further antenna elements, further antenna systems, and further transmission units.

In a first optional step M1/0, the transmission unit TU may transmit radio resource information PS-RES-INFO to the receiving unit RU, which receives the radio resource information PS-RES-INFO in a further optional step M1/00 and may further transmit the radio resource information PS-RES-INFO to the selection unit SU, which receives the radio resource information PS-RES-INFO in a further optional step M1/000.

The radio resource information PS-RES-INFO comprises for example indications about a location of the predefined radio frequency signals PS in a radio resource block RRB as exemplarily shown in Figure 6.

The radio resource block RRB may be based for example on a predefined frequency range PFR that is allocated to an operator of the radio communication systems RCS1, RCS2, RCS3, RCS4.

Regarding 3GPP LTE for example, the predefined frequency range PFR may be for example a frequency range of 1.4 MHz, 3 MHz, 5 MHz, 10 MHz, 15 MHz, or 20 MHz.

The predefined frequency range PFR is split into a first PRB (PRB = physical resource block) PRB1 and a second PRB PRB2, which each comprise for example in 3GPP LTE 12 frequency subcarriers FS with a PRB length of for example 1 ms = 14 OFDM symbol times and an OFDM symbol time length of for example 66,7 $\mu$s. Only a part (three frequency subcarriers) of the second PRB PRB2 is shown for simplification.

The first PRB PRB1 comprises a predefined frequency and time block PFTB. The predefined frequency and time block PFTB may have a time length of an OFDM frame (OFDM = orthogonal frequency division multiplexing), which is 10 milliseconds in case of 3GPP LTE. The predefined frequency and time block PFTB may exemplarily use or cover 50% of the first PRB PRB1.

If for example a LTE eNodeB transmits data traffic to one or several mobile stations, the predefined frequency and time block PFTB can be scheduled in PRB's that are not scheduled for data traffic.

In a preferred case, the predefined frequency and time block PFTB may cover all PRBs PRB1, PRB2 of the predefined frequency range PFR. In such a case channel information over the whole predefined frequency range PFR can be obtained by a single measurement. Such a resource usage may be applicable, if for example a new base station needs to be installed and configured or during a time of day, when there is no user plane traffic between the mobile stations within the radio cell C1, C2 and the base station BS1, BS2, if the base station is already in operation.

If this is not possible due to a large amount of data traffic, only a single PRB or a fraction of the PRB may be scheduled by the predefined frequency and time block PFTB as shown in Figure 6 for the first PRB PRB1. As an example, if 25% of the PRBs can be scheduled at a same time for a single measurement, then after 4 measurements the complete channel information can be available.

Within symbols S1, S2, S5, S8 and S12 conventional 3GPP LTE communication for reference symbols, synchronisation symbols and control plane traffic may be applied. Exemplarily as shown in Figure 6, first 2 symbols S1, S2 of the first PRB PRB1 may be used for carrying control data and reference data CRD and the 5th, 8th and 12th symbol S5, S8, S12 may be used for carrying reference data RD. Such an arrangement may be compliant to present 3GPP LTE standards. If the ENodeB may be not in normal operation, all symbols S1 to S14 of the predefined frequency and time block PFTB can be reserved for the present invention. This means, that the predefined frequency and time block PFTB may be not compliant to present 3GPP LTE standards and therefore may need a standard adaptation.

In Figure 6 only a single predefined frequency and time block PFTB of two possible adjacent predefined frequency and time blocks is shown within the first PRB PRB1 for simplification.

Within the second PRB PRB2 user data DATA, control data and reference data CRD and reference data RD are scheduled. Such a PRB may be not used for the present invention.

Within the remaining symbols S3, S5, S6, S7, S9, S10 S11, S13, S14 of the predefined frequency and time block PFTB predefined radio frequency signals PS for the present invention are applied.

According to an alternative (not shown in Figure 6), the predefined frequency and time block PFTB may be mapped to every second PRB in frequency dimension. According to a further alternative (also not shown in Figure 6), the predefined frequency and time block PFTB may be mapped to every second PRB in time dimension.

The radio resource information PS-RES-INFO may comprise for example an indication for one PRB or several indications for several PRBs. The radio resource information PS-RES-INFO may further comprise an indication for one or several frequency subcarriers of the one or several PRBs. The radio resource information PS-RES-INFO may even further comprise information of a coding applied to the predefined radio frequency signals PS. The radio resource information PS-RES-INFO may further comprise an order of transmission; e.g. in a first time slot ST the predefined radio frequency signal PS is only transmitted via the first element, in a second time slot ST only transmitted via the second antenna element AE2, in a third time slot ST transmitted by a first pre-coding vector via the first and the second antenna element and in a fourth time slot transmitted by a second pre-coding vector via the first and the second antenna element.

Preferably, a location within a radio resource block and/or a data structure and/or the order of transmission and and/or a coding of the predefined radio frequency signals PS may be configured and stored at the receiving unit RU, the transmission unit TU and the selection unit SU. In such a case, the radio resource information PS-RES-INFO does not need to be transmitted.

In a next step M1/1, the transmission unit TU transmits the predefined radio frequency signal PS on a first transmission line towards the first antenna element AE1, which receives the predefined radio frequency signal PS at a further step M1/2. Preferably, a first part DELTA1-PS of the predefined radio frequency signal PS may be measured near the first antenna element AE1 by means of a directional coupler or a calibration network placed preferably at the end of the first transmission line and may be provided in an optional step M1/3 for example to the transmission unit TU for calibrating the phase and amplitude of the predefined radio frequency signal PS. The first part DELTA1-PS of the predefined radio frequency signal PS may be received at the transmission unit TU by a further optional step M1/4.

In a next step M1/5, the first antenna element AE1 transmits the predefined radio frequency signal PS to the receiving unit RU, which receives the predefined radio frequency signal PS in a further step M1/6.

In a next step M1/7, the receiving unit RU may convert the received predefined radio frequency signals PS into well-known baseband I/Q samples MRS1 as described above regarding Figure 1. In an alternative, the receiving unit RU may use a low IF intermediate frequency and convert the the received predefined radio frequency signals PS into real samples MRS1, which are provided to the selection unit SU.

In a further step M1/8, the receiving unit RU transmits the baseband I/Q samples MRS1 preferably immediately to the selection unit SU, which receives the baseband I/Q samples MRS1 in a next step M1/9. Preferably, the receiving unit RU may further transmit location information LOC-MRS1 of the receiving unit RU and/or velocity information VEL-MRS1 of the receiving unit RU for the baseband I/Q samples MRS1 to the selection unit SU.

Alternatively, instead of providing baseband I/Q samples for each received reference symbol PS a more sophisticated data compression may be applied by providing for example only difference values for the baseband I/Q samples, which describe differences of a currently received baseband I/Q sample to a previous received baseband I/Q sample.

During further steps M1/10, M1/11, M1/12, M1/13, M1/14, M1/15, M1/16, M1/17, and M1/18, the predefined radio frequency signal PS is transmitted via the second antenna element AE2 to the receiving unit RU, a second part DELTA2-PS of the predefined radio frequency signal PS may be measured near the second antenna element AE2 at the end of a second transmission line and may be provided to the transmission unit TU , and baseband I/Q samples MRS2 and preferably location information LOC-MRS2 of the receiving unit RU and/or velocity information VEL-MRS2 of the receiving unit RU are transmitted from the receiving unit RU to the selection unit SU in a similar way as described above.

The predefined radio frequency signals PS are transmitted successively or alternating from the first antenna element AE1 and the second antenna element AE2 in such a way, that the receiving unit RU only receives the predefined radio frequency signals PS from the first antenna element AE1 or or the second antenna element AE2 at a specific point of time and/or a specific frequency and/or with a specific CDMA code.

The steps M1/1 to M1/18 can be used for a detailed channel measurement from each antenna element of the transmission unit TU to each antenna element of the receiving unit RU.

In next optional preferred steps M1/19 to M1/44 the predefined radio frequency signal PS is transmitted to the receiving unit RU by using successively several pre-coding vectors of a single codebook or by using several pre-coding vectors of two or more codebooks.

In a further step M1/19 for a first pre-coding vector, a first weighted predefined radio frequency signal PS1-PV1 is transmitted to the first antenna element AE1 and a second weighted predefined radio frequency signal PS2-PV1 is transmitted to the second antenna element AE2.

In further steps M1/20, M1/21, the first weighted predefined radio frequency signal PS1-PV1 is received at the first antenna element AE1 and the second weighted predefined radio frequency signal PS2-PV1 is received at the second antenna element AE2.

A first part DELTA1-PS1-PV1 of the first weighted predefined radio frequency signal PS1-PV1 may be measured near the first antenna element AE1 at the end of the first transmission line and may be provided for calibration purposes in a further step M1/22 to the transmission unit TU. Similarly, a second part DELTA2-PS2-PV1 of the second weighted predefined radio frequency signal PS2-PV1 may be measured near the second antenna element AE2 at the end of the second transmission line and may be provided for calibration purposes in a further step M1/24 to the transmission unit TU. In next steps M1/26, M1/27, the first antenna element AE1 and the second antenna element AE2 simultaneously transmit the first weighted predefined radio frequency signal PS1-PV1 and the second weighted predefined radio frequency signal PS2-PV1 using the first pre-coding vector to the receiving unit RU, which receives these signals in a further step M1/28.

In a next step M1/29, the receiving unit RU converts the received combination of the first weighted predefined radio frequency signal PS1-PV1 and the received second weighted predefined radio frequency signal PS2-PV1 into well-known baseband I/Q samples MRS3 as described above. In a further step M1/30, the receiving unit RU transmits the baseband I/Q samples MRS3 preferably immediately to the selection unit SU, which receives the baseband I/Q samples MRS3 in a next step M1/31. Preferably, the receiving unit RU may further transmit location information LOC-MRS3 of the receiving unit RU and/or velocity information VEL-MRS3 of the receiving unit RU for the baseband I/Q samples MRS3 to the selection unit SU.

During the further steps M1/32, M1/33, M1/34, M1/35, M1/36, M1/37, M1/38, M1/39, M1/40, M1/41, M1/42, M1/43 and M1/44, a further first weighted predefined radio frequency signal PS1-PV2 is transmitted via the first antenna element AE1 and a further second weighted predefined radio frequency signal PS2-PV2 is transmitted via the second antenna element AE2 for a second pre-coding vector to the receiving unit RU, a further first part DELTA1-PS1-PV2 of the further first weighted predefined radio frequency signal PS1-PV2 may be measured near the first antenna element AE1 at the end of the first transmission line and may be provided to the transmission unit TU. Similarly, a further second part DELTA2-PS2-PV2 of the further second weighted predefined radio frequency signal PS2-PV2 may be measured near the second antenna element AE2 at the end of the second transmission line and may be provided to the transmission unit TU. Baseband I/Q samples MRS4 and preferably corresponding location information LOC-MRS4 of the receiving unit RU and/or velocity information VEL-MRS4 of the receiving unit RU are transmitted from the receiving unit RU to the selection unit SU in a similar way as described above.

The first pre-coding vector and the second pre-coding vector are transmitted successively or alternating from the first antenna element AE1 and the second antenna element AE2 in such a way, that the receiving unit RU only receives predefined radio frequency signals belonging to the first pre-coding vector or the second pre-coding vector at a specific point of time and/or a specific frequency and/or with a specific CDMA code.

The steps M1/19 to M1/44 can be used for a noise reduced channel measurement from the antenna system of the transmission unit TU to each antenna element of the receiving unit RU.

By the steps M1/1 to M1/44, the transmission unit TU transmits the predefined radio frequency signal PS in a first time slot (e.g. symbol S3 according to Figure 6) from the first antenna element AE1, transmits the predefined radio frequency signal PS in a second time slot (e.g. symbol S4 according to Figure 6) from the second antenna element AE2, transmits the predefined radio frequency signal PS in a third time slot (e.g. symbol S6 according to Figure 6) from the first antenna element AE1 and the second antenna element AE1 by applying the first pre-coding vector of the codebook, and transmits the predefined radio frequency signal PS in a fourth time slot (e.g. symbol S7 according to Figure 6) from the first antenna element AE1 and the second antenna element AE1 by applying the second pre-coding vector of the codebook or a further codebook. This transmission can be equally applied for more than two antenna elements, for more than two pre-coding vectors and for pre-coding vectors from two or more codebooks.

Alternatively, the baseband I/Q samples MRS1, MRS2 and preferably MRS3 and MRS4 are collectively transmitted in a single step from the receiving unit RU to the selection unit SU by transmitting received radio frequency signals of a complete OFDM frame.

For the single transmissions M1/8, M1/17, M1/30 and M1/43, the receiving unit RU may synchronize to the received OFDM frame and may extract the received predefined radio frequency signals PS.

In a next step M1/45, the selection unit SU selects a transmission configuration TC for the transmission unit TU. This can be done online by applying the baseband I/Q samples MRS1 and MRS2 and preferably the baseband I/Q samples MRS3 and MRS4 directly to a selection algorithm. According to an alternative, the received baseband I/Q samples MRS1 and MRS2 and preferably the baseband I/Q samples MRS3 and MRS4 may be stored in a database and may be applied offline at a later point of time to the selection algorithm.

The selection algorithm implements some functions that are conventionally implemented for a person skilled in the art in a mobile station. In case of a 3GPP LTE system, the selection algorithm may comprise procedures for adjusting a sample rate to a proper 3GPP LTE sample rate and for finding a location of a CP (CP = cyclic prefix) by a correlation in time domain of the received OFDM frame with a delayed and conjugated version of the received OFDM frame. The delayed and conjugated version of the original signal are delayed by a number nFFT of samples. In case of LTE and a bandwidth of for example 20 MHz the number nFFT of samples is equal to 2048.

The selection algorithm may further comprise procedures for finding a location of the sync patterns by a correlation of the received baseband I/Q samples containing MRS1, MRS2, MRS3 or MRS4 with the known sync patterns.

From the detected positions of the CP and the sync patterns a starting position of an OFDM frame and starting positions of each symbol in the OFDM frame can be calculated. After a correction of a possible frequency offset for each symbol, nFFT samples are extracted and with a FFT (FFT = Fast Fourier Transformation) converted from time domain to frequency domain.

The predefined frequency and time block PFTB as shown in Figure 6 may be devided by the selection algorithm into a certain number of symbols sn and a certain number of frequency subcarriers scn, where the number of symbols sn and the number of frequency subcarriers scn is capable, that a sufficient number of pre-coding vectors npv can be multiplexed in time and/or frequency and/or CDMA code, and so small that for example the transmission path TP1 from the first base station BS1 to the first mobile station MS1 can be considered constant over the sn symbols and the scn frequency subcarriers. According to the example shown in Figure 6, the predefined frequency and time block PFTB with a size of 6 frequency subcarriers multiplied with 9 symbols for the present invention allows for eight times a transmission of the predefined radio frequency signal from one of the antenna elements and for 46 times a transmission of the predefined radio frequency signals with one of a group of pre-coding vectors.

For a single time-frequency resource block RB(i, j), where i is a time index and j is a frequency index, a kth pre-coding vector w(k, m) (k = number of pre-coding vector, m = number of codebook) of an mth codebook with a size s(m) x nTX (s(m) = number of pre-coding vectors in the mth codebook, nTX = number of antenna elements of the antenna system of the transmission unit TU, x = multiplication symbol) is used on 1 or more radio resource units of the predefined frequency and time block PFTB.

The baseband I/Q samples MRS1, MRS2, MRS3 or MRS4 may represented as r(i, j) and consist of the transmitted predefined radio frequency signal PS represented as x(i, j) multiplied with the kth pre-coding vector w(k, m) with a dimension (1 x nTX):

$$r(i,j) = x(i,j) \times w(k,m) \times CH(i,j) + n(i,j) \qquad (1)$$

where:

r(i, j): one of the Baseband I/Q samples MRS1, MRS2, MRS3 or MRS4 with a dimension of 1 x nRX (nRX = number of antenna elements of the antenna system of the receiving unit RU),

x(i,j): transmitted predefined radio frequency signal PS,

w(k,m): kth pre-coding vector of mth codebook with a dimension of 1 x nTX,

CH: channel (e.g. the first transmission path TP1 or the second transmission path TP2) with a dimension of nTX x nRX,

n(i, j): noise received at the receiving unit RU for one of the Baseband I/Q samples MRS1, MRS2, MRS3 or MRS4 with a dimension of 1 x nRX.

After a division by the known predefined radio frequency signal PS, the selection algorithm calculates an estimation CHeff(i, j, k, m) of an effective channel of the kth codevector w(k, m) of the mth codebook at the time i and the frequency j by following equation:

$$CHeff(i, j, k, m) = r(i, j) / x(i, j) = w(k, m) \times CH(i, j) + n(i, j) / x(i, j)$$

$$(2)$$

The result of this calculation is stored in a database and the calculation may be repeated for the time-frequency resource block RB(i, j) for all or a subset of pre-coding vectors of a single codebook or for all or a subset of pre-coding vectors of two or more codebooks and the further results may be also stored in the database. Optionally, an averaging may be applied, if for example a same pre-coding vector is transmitted twice or more within the predefined frequency and time block PFTB.

A maximum reception power PCHmax(i, j, m) at the receiving unit RU of a best effective channel of codebook m may be selected by following equation:

$$PCHmax(i, j, m) = max(abs(CHeff(i,j,k,m))^2), \quad k = 1, 2, \ldots s(m) \qquad (3)$$

Such selection by the selection algorithm can be used in several ways:

A performance of different codebooks may be compared by averaging PCHmax over frequency and time. This can be used during a design phase of a codebook for a selection of a codebook with best performance or to decide, which codebook may be used in the first radio cell C1 or the second radio cell C2. For example, for a vertical array of antenna elements a first codebook may be configured with 16 pre-coding vectors representing a different one of the following 16 downtilt angles (-24°, -22°, -20°, -18°, - 16°, -14°, -12°, -10°, -8°, -6°, -4°, -2°, 0°, 2°, 4°, 6°). A second codebook may be configured with further 14 pre-coding vectors representing 14 downtilts with closer spacing (-13°, -12°, -11°, -10°, -9°, -8°, -7°, 6°, 5°, 4°, 3°, 2°, 1°, 0°). All these downtilt angles may describe vertical angles between a main lobe of the pre-coding vectors and a so-called broadside direction of the array. A result of the selection algorithm may be that the second codebook is more suitable to a current distribution of mobile stations within the first radio cell C1 or the second radio cell C2.

In case of vertical beamforming with various down tilt angles, the selection algorithm can be used to find a best down tilt for a complete radio cell or for a number of predefined areas of the first radio cell C1 or the second radio cell C2.

The antenna element can also be arranged as a horizontal array or a 2-dimensional array.

In a next step M1/46, the selection unit SU transmits the selected transmission configuration TC such as a selected codebook or a new codebook with selected pre-coding vectors from the selection unit SU to the transmission unit TU, which receives the transmission configuration TC in a further step M1/47. Preferably, location information TC-LOC may be also provided from the selection unit SU to the transmission unit TU, which may be deduced from the location information LOC-MRS1, LOC-MRS2, LOC-MRS3 and/or LOC-MRS4 for example by averaging.

If the application of pre-coding vectors may be velocity based (e.g. for mobile stations with low velocity pre-coding vectors with a tight beam may be applied and for mobile stations with high velocity pre-coding vectors with a broader beam may be applied), also velocity information TC-VEL deduced from the velocity information VEL-MRS1, VEL-MRS2, VEL-MRS3 and/or VEL-MRS4 for example by averaging.

Steps M1/1 to M1/47 may be repeated continuously or after a predefined time such as 10 ms, 100 ms, 1 s or even longer times.

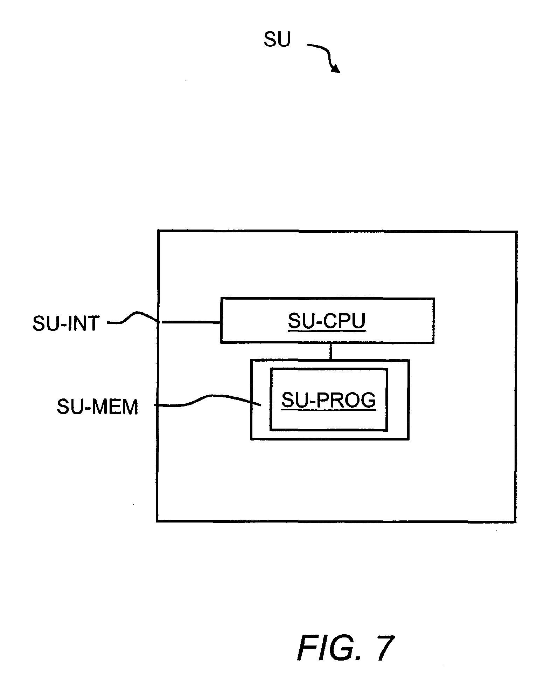

Referring to Figure 7 a block diagram of the selection unit SU of Figure 5 is shown. The selection unit SU may comprise an interface SU-INT such as a data interface, a CPU (CPU = central processing unit) SU-CPU, and a computer readable medium SU-MEM. A computer readable program SU-PROG may be stored at the computer readable medium SU-MEM. The CPU SU-CPU is foreseen for executing the computer readable program SU-PROG. The computer readable program SU-PROG is foreseen for executing and controlling steps of the method MET1, which are related to the selection unit SU.

The selection unit SU may receive via the interface SU-INT the baseband I/Q samples MRS1, MRS2 and preferably MRS3, MRS4 and optionally corresponding location information LOC-MRS1, LOC-MRS2, LOC-MRS3, LOC-MRS4 and/or corresponding velocity information VEL-MRS1, VEL-MRS2, VEL-MRS3, VEL-MRS4.

The selection unit SU may transmit via the interface SU-INT the transmission configuration TC and preferably the location information TC-LOC and optionally the velocity information TC-VEL.

In case of the base station BS1, the selection unit SU may be part of the transmission unit TU 1.

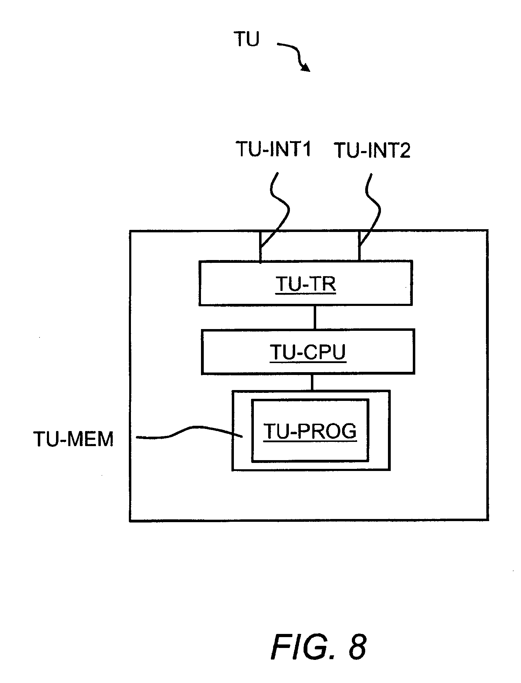

Referring to Figure 8 a block diagram of the transmission unit TU of Figure 5 is shown. The transmission unit TU may be part of a conventional radio transmitter or radio transceiver with an enhanced algorithm regarding the invention for applying the predefined radio frequency signals PS in a special way to the antenna elements AE1, AE2 of the antenna system. The transmission unit TU may comprise a transceiver TU-TR with a first interface TU-INT1 for the first antenna element AE1 and a second interface TU-INT2 for the second antenna element AE2, a CPU TU-CPU, and a computer readable medium TU-MEM. A computer readable program TU-PROG may be stored at the computer readable medium TU-MEM. The CPU TU-CPU is foreseen for executing the computer readable program TU-PROG. The computer readable program TU-PROG is foreseen for executing and controlling steps of the method MET1, which are related to the transmission unit TU.

The transceiver TU-TR provides the predefined radio frequency signals PS successively to the first or the second interface TU-INT1, TU-INT2 and provides the predefined radio frequency signals PS to the first and the second interface TU-INT1, TU-INT2 by applying successively a first one and a second one of at least two pre-coding vectors of one codebook or several codebooks. The transmission unit TU may further receive the parts DELTA1-PS, DELTA2-PS, DELTA1-PS1-PV1, DELTA2-PS2-PV1, DELTA1-PS1-PV2, DELTA2-PS2-PV2 of the predefined radio frequency signal PS for the calibration purposes of the transmission lines between the transmission unit TU and the antenna elements AE1, AE2 of the antenna system.

A person of skill in the art would readily recognize that steps of the method MET1 of the above-described embodiments can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

Functional blocks denoted as "... unit" or "means for ..." shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, may be provided through the use of dedicated hardware as well as the through the use of hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method (MET1) for optimizing radio link transmission in a radio communication system (RCS1, RCS2, RCS3, RCS4), said method (MET1) comprising the steps of:

   transmitting (M1/1, M1/10) at least one predefined radio frequency signal (PS, PS1, PS2) successively from a first one and a second one of at least two antenna elements (AE1, AE2, BS1-AE1, BS1-AE2, BS2-AE1, BS2-AE2) of at least one antenna array (BS1-AS1, BS2-AS1) to a receiving unit (RU) of an apparatus (AP),

   - receiving (M1/6) at said receiving unit (RU) at least one first radio signal for said at least one predefined radio frequency signal (PS, PS1, PS2) transmitted via said first one of said at least two antenna elements (AE1, AE2, BS1-AE1, BS1-AE2, BS2-AE1, BS2-AE2),
   - receiving (M1/15) at said receiving unit (RU) at least one second radio signal for said at least one predefined radio frequency signal (PS, PS1, PS2)transmitted via said second one of said at least two antenna elements (AE1, AE2, BS1-AE1, BS1-AE2, BS2-AE1, BS2-AE2),
   - transmitting (M1/26, M1/27, M1/39, M1/40) said at least one predefined radio frequency signal (PS, PS1, PS2) by applying successively at least two pre-coding vectors of at least one codebook to said first one and said second one of said at least two antenna elements (AE1, AE2, BS1-AE1, BS1-AE2, BS2-AE1, BS2-AE2) to said receiving unit (RU),
   - receiving (M1/28) at said receiving unit (RU) at least one third radio signal for said at least one predefined radio frequency signal (PS, PS1, PS2) transmitted via a first one of said at least two pre-coding vectors,
   - receiving (M1/41) at said receiving unit (RU) at least one fourth radio signal for said at least one predefined radio frequency signal (PS, PS1, PS2) transmitted via at least a second one of said at least two pre-coding vectors,
   - providing (M1/8, M1/17, M1/30, M1/43) said received at least one first radio signal (MRS1, MRS1-MS1, MRS1-MS2, MRS1-PS1-MS1, MRS1-PS2-MS1), said received at least one second radio signal (MRS2, MRS2-MS1, MRS2-MS2, MRS2-PS1-MS1, MRS2-PS2-MS2), said received at least one third radio signal (MRS3) and said received at least one fourth radio signal (MRS4) from said receiving unit (RU, MS1, MS2, MS3, AP) to a selection unit (SU, SU5) of said apparatus (AP),
   - selecting (M1/45) at said selection unit (SU, SU5) at least one transmission configuration (TC) of at least two transmission configurations based on said received at least one first radio signal (MRS1, MRS1-MS1, MRS1-MS2, MRS1-PS1-MS1, MRS1-PS2-MS1), said received at least one second radio signal (MRS2, MRS2-MS1, MRS2-MS2, MRS2-PS1-MS1, MRS2-PS2-MS2), said received at least one third radio signal (MRS3), said received at least one fourth radio signals (MRS4) and said at least one predefined radio frequency signal (PS, PS1, PS2), and

- providing (M1/46) from said selection unit (SU, SU5) said selected at least one transmission configuration (TC) to a transmission unit (TU, TU1) of said at least one antenna array (BS1-AS1, BS2-AS1).

2. Method (MET1) according to claim 1, wherein said received at least one first radio signal (MRS1, MRS1-MS1, MRS1-MS2, MRS1-PS1-MS1, MRS1-PS2-MS1), said received at least one second radio signal (MRS2, MRS2-MS1, MRS2-MS2, MRS2-PS1-MS1, MRS2-PS2-MS2), said received at least one third radio signal (MRS3) and said received at least one fourth radio signal (MRS4) are provided as an received OFDM frame from said receiving unit (RU, MS1, MS2, MS3, AP) to said selection unit (SU, SU1,SU2, SU3,SU4, SU5).

3. Method (MET1) according to claim 1 or claim 2, wherein said received at least one first radio signal (MRS1, MRS1-MS1, MRS1-MS2, MRS1-PS1-MS1, MRS1-PS2-MS1), said received at least one second radio signal (MRS2, MRS2-MS1, MRS2-MS2, MRS2-PS1-MS1, MRS2-PS2-MS2), said received at least one third radio signal (MRS3) and said received at least one fourth radio signal (MRS4) are provided in a form of I/Q samples from said receiving unit (RU, MS1, MS2, MS3, AP) to said selection unit (SU, SU1, SU2, SU3, SU4, SU5).

4. Method (MET1) according to any of the preceding claims, wherein said received at least one first radio signal (MRS1, MRS1-MS1, MRS1-MS2, MRS1-PS1-MS1, MRS1-PS2-MS1), said received at least one second radio signal (MRS2, MRS2-MS1, MRS2-MS2, MRS2-PS1-MS1, MRS2-PS2-MS2), said received at least one third radio signal (MRS3) and said received at least one fourth radio signal (MRS4) are provided instantaneously or collectively at a later point of time from said receiving unit (RU, MS1, MS2, MS3, AP) to said selection unit (SU, SU1, SU2, SU3, SU4, SU5).

5. Method (MET1) according to any of the preceding claim, wherein said at least two transmission configurations are said at least one codebook and at least one further codebook comprising different sets of pre-coding vectors or wherein said at least two transmission configurations are at least two pre-coding vectors.

6. Method (MET1) according to any of the preceding claims, wherein said at least one predefined radio frequency signal (PS, PS1, PS2) is applied to at least one radio resource unit in a predefined frequency and time range (PFTB).

7. Method (MET1) according to claim 6, wherein said at least one predefined radio frequency signal (PS, PS1, PS2) is periodically applied to all radio resource units of said predefined frequency and time range for a predefined time (PFTB).

8. Method (MET1) according to claim 7, wherein said radio communication system (RCS1, RCS2, RCS3, RCS4) is an LTE access network and wherein first two symbols (S1, S2) of a physical resource block (PRB1) of said predefined frequency and time range for a predefined time (PFTB) carry control data and reference data (CRD), wherein fifth, eighth and twelfth symbols (S5, S8, S12) of said physical resource block (PRB1) carry reference data (RD) and wherein in remaining symbols (S3, S5, S6, S7, S9, S10, S11, S13, S14) of said physical resource block (PRB1) said predefined radio signals (PS) are applied.

9. Method (MET) according to claim 6, wherein said predefined frequency and time range (PFTB) covers all physical resource blocks of a predefined frequency range (PFR) allocated to an operator of said radio communication system (RCS1, RCS2, RCS3, RCS4).

10. Method (MET1) according to any of the preceding claims, wherein said method further comprises the steps of:

- providing (M1(8, M1/17, M1/30, M1/43) location information (LOC-MRS1, LOC-MRS2, LOC-MRS3, LOC-MRS4) and/or velocity information (VEL-MRS1, VEL-MRS2, VEL-MRS3, VEL-MRS4) for said receiving steps (M1/6, M1/15, M1/28, M1/41) from said receiving unit (RU, MS1, MS2, MS3, AP) to said selection unit (SU, SU1, SU2, SU3, SU4, SU5), and
- providing (M1/46) from said selection unit (SU, SU1, SU2, SU3, SU4, SU5) said location information (TC-LOC) and/or said velocity information (TC-VEL) for said selected at least one transmission configuration (TC) to said transmission unit (TU, TU1, TU2).

11. Method (MET1) according to claim 10, wherein said method (MET1) provides an offline evaluation of said at least two transmission configurations by following sub-steps:

- performing measurements at various locations and by various velocities within a radio cell belonging to said at least one antenna array (BS1-AS1, BS2-AS1),
- buffering said received at least one first radio signal (MRS1, MARS1-MS1, MRS1-MS2, MRS1-PS1-MS1, MRS1-PS2-MS1), said received at least one second radio signal (MRS2, MRS2-MS1, MRS2-MS2, MRS2-PS1-MS1, MRS2-PS2-MS2), said received at least one third radio signal (MRS3) and said received at least one fourth radio signal (MRS4) at said receiving unit (RU), and
- connecting said receiving unit (RU) to said selection unit (SU) by a data cable, and wherein in said providing step (M1/46) said buffered and received first radio signal (MRS1, MRS1-MS1, MRS1-MS2, MRS1-PS1-MS1, MRS1-PS2-MS1), said buffered and received at least one second radio signal (MRS2, MRS2-MS1, MRS2-MS2, MRS2-PS1-MS1, MRS2-PS2-MS2),said buffered and received at least one third radio signal (MRS3) and said buffered and received at least one fourth radio signal (MRS4) are transmitted via said connected data cable after finishing said measurements.

12. An apparatus (AP) comprising:

- a receiving unit (RU) for successively receiving at least one first radio signal (MRS1, MRS1-MS1, MRS1-MS2, MRS1-PS1-MS1, MRS1-PS2-MS1) of a transmission of at least one predefined radio frequency signal (PS, PS1, PS2) via a first one of at least two antenna elements (AE1, AE2, BS1-AE1, BS1-AE2, BS2-AE1, BS2-AE2) of at least one antenna array (BS1-AS1, BS2-AS1) and at least one second radio signal (MRS2, MRS2-MS1, MRS2-MS2, MRS2-PS1-MS1, MRS2-PS2-MS2) of a transmission of said at least one predefined radio frequency signal (PS, PS1, PS2) via a second one of said at least two antenna elements (AE1, AE2, BS1-AE1, BS1-AE2, BS2-AE1, BS2-AE2) of said at least one antenna array (BS1-AS1, BS2-AS1), for successively receiving at least one third radio signal (MRS3) of a transmission of said at least one predefined radio frequency signal (PS, PS1, PS2) by applying a first one of at least two pre-coding vectors of at least one codebook to said first one and said second one of said at least two antenna elements (AE1, AE2, BS1 - AE1, BS1-AE2, BS2-AE1, BS2-AE2), and at least one fourth radio signal (MRS4) of a transmission of said at least one predefined radio frequency signal (PS, PS1, PS2) by applying a second one of said at least two pre-coding vectors of said at least one codebook to said first one and said second one of said at least two antenna elements (AE1, AE2, BS1-AE1, BS1-AE2, BS2-AE1, BS2-AE2), and for providing said received at least one first radio signal (MRS1, MRS1-MS1, MRS1-MS2, MRS1-PS1-MS1, MRS1-PS2-MS1), said received at least one second radio signal (MRS2, MRS2-MS1, MRS2-MS2, MRS2-PS1-MS1, MRS2-PS2-MS2), said received at least one third radio signal (MRS3) and said received at least one fourth radio signal (MRS4) to a selection unit (SU, SU5),
- said selection unit (SU, SU5) for selecting at least one transmission configuration (TC) of at least two transmission configurations based on said received at least one first radio signal (MRS1, MRS1-MS1, MRS1-MS2, MRS1-PS1-MS1, MRS1-PS2-MS1), said received at least one second radio signal (MRS2, MRS2-MS1, MRS2-MS2, MRS2-PS1-MS1, MRS2-PS2-MS2), said received at least one third radio signal (MRS3), said received at least one fourth radio signals (MRS4) and said at least one predefined radio frequency signal (PS, PS1, PS2), and
- means (SU-INT) for providing said selected at least one transmission configuration (TC) to a transmission unit (TU, TU1) of said at least one antenna array (BS1-AS1, BS2-AS1)..

13. Apparatus (AP) according to claim 12, wherein said apparatus (AP) is a wireless measurement equipment, a wireless test equipment or a radio network scanner.

14. A transmission unit (TU, TU1, TU2) of at least one antenna array (BS1-AS1, BS2-AS1) comprising:

- means (TU-TR, TU-INT1, TU-INT2) for transmitting to a receiving unit (RU, MS1, MS2, MS3, AP) at least one predefined radio frequency signal (PS, PS1, PS2)successively from a first one and a second one of at least two antenna elements (AE1, AE2, BS1-AE1, BS1-AE2, BS2-AE1, BS2-AE2) of said at least one antenna array (BS1-AS1, BS2-AS1) and for transmitting said at least one predefined radio frequency signal (PS, PS1, PS2) to said receiving unit (RU, MS1, MS2, MS3, AP) by applying successively at least two pre-coding vectors of at least one codebook to said first one and said second one of said at least two antenna elements (AE1, AE2, BS1-AE1, BS1-AE2, BS2-AE1, BS2-AE2), and
- means for receiving from a selection unit (SU, SU1, SU2, SU3, SU4, SU5) at least one transmission configuration (TC) selected at said selection unit (SU, SU1, SU2, SU3, SU4, SU5) based on at least one first radio signal (MRS1, MRS1-MS1, MRS1-MS2, MRS1-PS1-MS1, MRS1-PS2-MS1) received at said receiving unit (RU, MS1, MS2, MS3, AP) for said at least one predefined radio frequency signal (PS, PS1, PS2) transmitted via said first one of said at least two antenna elements (AE1, AE2, BS1-AE1, BS1-AE2, BS2-AE1, BS2-AE2), at least one second radio signal (MRS2, MRS2-MS1, MRS2-MS2, MRS2-PS1-MS1, MRS2-PS2-MS2) received at said

**16**

receiving unit (RU, MS1, MS2, MS3, AP) for said at least one predefined radio frequency signal (PS, PS1, PS2) transmitted via said second one of said at least two antenna elements (AE1, AE2, BS1-AE1, BS1-AE2, BS2-AE1, BS2-AE2), at least one third radio signal (MRS3) received at said receiving unit (RU, MS1, MS2, MS3, AP) for said at least one predefined radio frequency signal (PS, PS1, PS2) transmitted via a first one of said at least two pre-coding vectors at least one fourth radio signals (MRS4) received at said receiving unit (RU, MS1, MS2, MS3, AP) for said at least one predefined radio frequency signal (PS, PS1, PS2) transmitted via at least a second one of said at least two pre-coding vectors and said at least one predefined radio frequency signal (PS, PS1, PS2).

**15.** A base station (BS1) comprising a transmission unit (TU, TU1) according to claim 14.

**Patentansprüche**

**1.** Verfahren (MET1) zur Optimierung der Funkverbindungsübertragung in einem Funkkommunikationssystem (RCS1, RCS2, RCS3, RCS4), wobei das besagte Verfahren (MET1) die folgenden Schritte umfasst:

- Aufeinanderfolgendes Übertragen (M1/1, M1/10) mindestens eines vordefinierten Funkfrequenzsignals (PS, PS1, PS2) von einem ersten und einem zweiten unter mindestens zwei Antennenelementen (AE1, AE2, BS1-AE1, BS1-AE2, BS2-AE1, BS2-AE2) mindestens einer Antenennanordnung (BS1-AS1, BS2-AS1) an eine Empfangseinheit (RU) einer Vorrichtung (AP),
- Empfangen (M1/6), an der besagten Empfangseinheit (RU), mindestens eines ersten Funksignals für das besagte mindestens eine über das besagte erste der besagten mindestens zwei Antennenelemente (AE1, AE2, BS1-AE1, BS1-AE2, BS2-AE1, BS2-AE2) übertragene vordefinierte Funkfrequenzsignal (PS, PS1, PS2),
- Empfangen (M1/15), an der besagten Empfangseinheit (RU), mindestens eines zweiten Funksignals für das besagte mindestens eine über das besagte zweite der besagten mindestens zwei Antennenelemente (AE1, AE2, BS1-AE1, BS1-AE2, BS2-AE1, BS2-AE2) übertragene vordefinierte Funkfrequenzsignal (PS, PS1, PS2),
- Übertragen (M1/26, M1/27, M1/39, M1/40) des besagten mindestens einen vordefinierten Funkfrequenzsignals (PS, PS1, PS2) durch aufeinanderfolgendes Anwenden mindestens zweier Vorcodierungsvektoren mindestens eines Codebuchs auf das besagte erste und das besagte zweite der besagten mindestens zwei Antennenelemente (AE1, AE2, BS1-AE1, BS1-AE2, BS2-AE1, BS2-AE2) an die besagte Empfangseinheit (RU),
- Empfangen (M1/28), an der besagten Empfangseinheit (RU), mindestens eines dritten Funksignals für das besagte mindestens eine über einen ersten der besagten mindestens zwei Vorcodierungsvektoren übertragene vordefinierte Funkfrequenzsignal (PS, PS1, PS2),
- Empfangen (M1/41), an der besagten Empfangseinheit (RU), mindestens eines vierten Funksignals für das besagte mindestens eine über mindestens einen zweiten der besagten mindestens zwei Vorcodierungsvektoren übertragene vordefinierte Funkfrequenzsignal (PS, PS1, PS2),
- Bereitstellen (M1/8, M1/17, M1/30, M1/43) des besagten empfangenen mindestens einen ersten Funksignals (MRS1, MRS1-MS1, MRS1-MS2, MRS1-PS1-MS1, MRS1-PS2-MS1), des besagten empfangenen mindestens einen zweiten Funksignals (MRS2, MRS2-MS1, MRS2-MS2, MRS2-PS1-MS1, MRS2-PS2-MS2), des besagten empfangenen mindestens einen dritten Funksignals (MRS3) und des besagten empfangenen mindestens einen vierten Funksignals (MRS4) von der besagten Empfangseinheit (RU, MS1, MS2, MS3, AP) an eine Auswahleinheit (SU, SU5) der besagten Vorrichtung (AP),
- Auswählen (M1/45), an der besagten Auswahleinheit (SU, SU5), mindestens einer Übertragungskonfiguration (TC) unter mindestens zwei Übertragungskonfigurationen auf der Basis des besagten empfangenen mindestens einen ersten Funksignals (MRS1, MRS1-MS1, MRS1-MS2, MRS1-PS1-MS1, MRS1-PS2-MS1), des besagten empfangenen mindestens einen zweiten Funksignals (MRS2, MRS2-MS1, MRS2-MS2, MRS2-PS1-MS1, MRS2-PS2-MS2), des besagten empfangenen mindestens einen dritten Funksignals (MRS3), des besagten empfangenen mindestens einen vierten Funksignals (MRS4) und des besagten mindestens einen vordefinierten Funkfrequenzsignals (PS, PS1, PS2), und
- Bereitstellen (M1/46), von der besagten Auswahleinheit (SU, SU5), der besagten ausgewählten mindestens einen Übertragungskonfiguration (TC) an eine Übertragungseinheit (TU, TU1) der besagten mindestens einen Antennenanordnung (BS1-AS1, BS2-AS1).

**2.** Verfahren (MET1) nach Anspruch 1, wobei das besagte empfangene mindestens eine erste Funksignal (MRS1, MRS1-MS1, MRS1-MS2, MRS1-PS1-MS1, MRS1-PS2-MS1), das besagte empfangene mindestens eine zweite Funksignal (MRS2, MRS2-MS1, MRS2-MS2, MRS2-PS1-MS1, MRS2-PS2-MS2), das besagte empfangene mindestens eine dritte Funksignal (MRS3) und das besagte empfangene mindestens eine vierte Funksignal (MRS4) als ein empfangener OFDM-Rahmen von der besagten Empfangseinheit (RU, MS1, MS2, MS3, AP) an die besagte Auswahleinheit (SU, SU1, SU2, SU3, SU4, SU5) bereitgestellt werden.

3. Verfahren (MET1) nach Anspruch 1 oder Anspruch 2, wobei das besagte empfangene mindestens eine erste Funksignal (MRS1, MRS1-MS1, MRS1-MS2, MRS1-PS1-MS1, MRS1-PS2-MS1), das besagte empfangene mindestens eine zweite Funksignal (MRS2, MRS2-MS1, MRS2-MS2, MRS2-PS1-MS1, MRS2-PS2-MS2), das besagte empfangene mindestens eine dritte Funksignal (MRS3) und das besagte empfangene mindestens eine vierte Funksignal (MRS4) in einer Form von I/Q-Abtastwerten von der besagten Empfangseinheit (RU, MS1, MS2, MS3, AP) an die besagte Auswahleinheit (SU, SU1, SU2, SU3, SU4, SU5) bereitgestellt werden.

4. Verfahren (MET1) nach einem beliebigen der vorstehenden Ansprüche, wobei das besagte empfangene mindestens eine erste Funksignal (MRS1, MRS1-MS1, MRS1-MS2, MRS1-PS1-MS1, MRS1-PS2-MS1), das besagte empfangene mindestens eine zweite Funksignal (MRS2, MRS2-MS1, MRS2-MS2, MRS2-PS1-MS1, MRS2-PS2-MS2), das besagte empfangene mindestens eine dritte Funksignal (MRS3) und das besagte mindestens eine vierte Funksignal (MRS4) unverzüglich oder kollektiv zu einem späteren Zeitpunkt von der besagten Empfangseinheit (RU, MS1, MS2, MS3, AP) an die besagte Auswahleinheit (SU, SU1, SU2, SU3, SU4, SU5) bereitgestellt werden.

5. Verfahren (MET1) nach einem beliebigen der vorstehenden Ansprüche, wobei die besagten mindestens zwei Übertragungskonfigurationen das besagte mindestens eine Codebuch und mindestens ein weiteres Codebuch mit unterschiedlichen Sätzen von Vorcodierungsvektoren sind, oder wobei die besagten mindestens zwei Übertragungskonfigurationen mindestens zwei Vorcodierungsvektoren sind.

6. Verfahren (MET1) nach einem beliebigen der vorstehenden Ansprüche, wobei das besagte mindestens eine vordefinierte Funkfrequenzsignal (PS, PS1, PS2) auf mindestens eine Funkressourceneinheit in einem vordefinierten Frequenz- und Zeitbereich (PFTB) angewendet wird.

7. Verfahren (MET1) nach Anspruch 6, wobei das besagte mindestens eine vordefinierte Funkfrequenzsignal (PS, PS1, PS2) periodisch auf alle Funkressourceneinheiten des besagten vordefinierten Frequenz- und Zeitbereichs für eine vordefinierte Zeit (PFTB) angewendet wird.

8. Verfahren (MET1) nach Anspruch 7, wobei das besagte Funkkommunikationssystem (RCS1, RCS2, RCS3, RCS4) ein LTE-Zugangsnetzwerk ist, und wobei zwei erste Symbole (S1, S2) eines physischen Ressourcenblocks (PRB1) des besagten vordefinierten Frequenz- und Zeitbereichs für eine vordefinierte Zeit (PFTB) Steuerdaten und Referenzdaten (CRD) transportieren, wobei fünfte, achte und zwölfte Symbole (S5, S8, S12) des besagten physischen Ressourcenblocks (PRB1) Referenzdaten (RD) transportieren, und wobei in den restlichen Symbolen (S3, S4, S6, S7, S9, S10, S11, S13, S14) des besagten physischen Ressourcenblocks (PRB1) die besagten vordefinierten Funksignale (PS) angewendet werden.

9. Verfahren (MET1) nach Anspruch 6, wobei der besagte vordefinierte Frequenz- und Zeitbereich (PFTB) alle physischen Ressourcenblöcke eines einem Betreiber des besagten Funkkommunikationssystems (RCS1, RCS2, RCS3, RCS4) zugeordneten vordefinierten Frequenzbereichs (PFR) abdeckt.

10. Verfahren (MET1) nach einem beliebigen der vorstehenden Ansprüche, wobei das besagte Verfahren weiterhin die folgenden Schritte umfasst:

    - Bereitstellen (M1/8, M1/17, M1/30, M1/43) von Standortinformationen (LOC-MRS1, LOC-MRS2, LOC-MRS3, LOC-MRS4) und/oder Geschwindigkeitsinformationen (VEL-MRS1, VEL-MRS2, VEL-MRS3, VEL-MRS4) für die besagten Schritte des Empfangens (M1/6, M1/15, M1/28, M1/41) von der besagten Empfangseinheit (RU, MS1, MS2, MS3, AP) an die besagte Auswahleinheit (SU, SU1, SU2, SU3, SU4, SU5), und
    - Bereitstellen (M1/46), von der besagten Auswahleinheit (SU, SU1, SU2, SU3, SU4, SU5), der besagten Standortinformationen (TC-LOC) und/oder der besagten Geschwindigkeitsinformationen (TC-VEL) für die besagte ausgewählte mindestens eine Übertragungskonfiguration (TC) an die besagte Übertragungseinheit (TU, TU1, TU2).

11. Verfahren (MET1) nach Anspruch 10, wobei das besagte Verfahren (MET1) eine Offline-Bewertung der besagten mindestens zwei Übertragungskonfigurationen durch das Durchführen der folgenden Teilschritte bereitstellt:

    - Vornehmen von Messungen an verschiedenen Standorten und bei verschiedenen Geschwindigkeiten innerhalb einer Funkzelle, welche der besagten mindestens einen Antennenanordnung (BS1-AS1, BS2-AS1) angehört,

- Zwischenspeichern des besagten empfangenen mindestens einen ersten Funksignals (MRS1, MRS1-MS1, MRS1-MS2, MRS1-PS1-MS1, MRS1-PS2-MS1), des besagten empfangenen mindestens einen zweiten Funksignals (MRS2, MRS2-MS1, MRS2-MS2, MRS2-PS1-MS1, MRS2-PS2-MS2), des besagten empfangenen mindestens einen dritten Funksignals (MRS3) und des besagten empfangenen mindestens einen vierten Funksignals (MRS4) an der besagten Empfangseinheit (RU), und

- Verbinden der besagten Empfangseinheit (RU) mit der besagten Auswahleinheit (SU) anhand eines Datenkabels, und wobei in dem besagten Schritt des Bereitstellens (M1/46) das besagte zwischengespeicherte und empfangene erste Funksignal (MRS1, MRS1-MS1, MRS1-MS2, MRS1-PS1-MS1, MRS1-PS2-MS1), das besagte zwischengespeicherte und empfangene mindestens eine zweite Funksignal (MRS2, MRS2-MS1, MRS2-MS2, MRS2-PS1-MS1, MRS2-PS2-MS2), das besagte zwischengespeicherte und empfangene mindestens eine dritte Funksignal (MRS3) und das besagte zwischengespeicherte und empfangene mindestens eine vierte Funksignal (MRS4) nach Beenden der besagten Messungen über das besagte angeschlossene Datenkabel übertragen werden.

12. Vorrichtung (AP), umfassend:

- Eine Empfangseinheit (RU) für den aufeinanderfolgenden Empfang mindestens eines ersten Funksignals (MRS1, MRS1-MS1, MRS1-MS2, MRS1-PS1-MS1, MRS1-PS2-MS1) einer Übertragung mindestens eines vordefinierten Funkfrequenzsignals (PS, PS1, PS2) über ein erstes von mindestens zwei Antennenelementen (AE1, AE2, BS1-AE1, BS1-AE2, BS2-AE1, BS2-AE2) mindestens einer Antenennanordnung (BS1-AS1, BS2-AS1) und mindestens eines zweiten Funksignals (MRS2, MRS2-MS1, MRS2-MS2, MRS2-PS1-MS1, MRS2-PS2-MS2) einer Übertragung des besagten mindestens einen vordefinierten Funkfrequenzsignals (PS, PS1, PS2) über ein zweites der besagten mindestens zwei Antennenelemente (AE1, AE2, BS1-AE1, BS1-AE2, BS2-AE1, BS2-AE2) mindestens einer Antenennanordnung (BS1-AS1, BS2-AS1), für den aufeinanderfolgenden Empfang mindestens eines dritten Funksignals (MRS3) einer Übertragung des besagten mindestens einen vordefinierten Funkfrequenzsignals (PS, PS1, PS2) durch Anwenden eines ersten von mindestens zwei Vorcodierungsvektoren mindestens eines Codebuchs auf das besagte erste und das besagte zweite der besagten mindestens zwei Antennenelemente (AE1, AE2, BS1-AE1, BS1-AE2, BS2-AE1, BS2-AE2) und mindestens eines vierten Funksignals (MRS4) einer Übertragung des besagten mindestens einen vordefinierten Funkfrequenzsignals (PS, PS1, PS2) durch Anwenden eines zweiten der besagten mindestens zwei Vorcodierungsvektoren des besagten mindestens einen Codebuchs auf das besagte erste und das besagte zweite der besagten mindestens zwei Antennenelemente (AE1, AE2, BS1-AE1, BS1-AE2, BS2-AE1, BS2-AE2), und zum Bereitstellen des besagten empfangenen mindestens einen ersten Funksignals (MRS1, MRS1-MS1, MRS1-MS2, MRS1-PS1-MS1, MRS1-PS2-MS1), des besagten empfangenen mindestens einen zweiten Funksignals (MRS2, MRS2-MS1, MRS2-MS2, MRS2-PS1-MS1, MRS2-PS2-MS2), des besagten empfangenen mindestens einen dritten Funksignals (MRS3) und des besagten empfangenen mindestens einen vierten Funksignals (MRS4) an eine Auswahleinheit (SU, SU5),

- die besagte Auswahleinheit (SU, SU5) für die Auswahl mindestens einer Übertragungskonfiguration (TC) unter mindestens zwei Übertragungskonfigurationen auf der Basis des besagten empfangenen mindestens einen ersten Funksignals (MRS1, MRS1-MS1, MRS1-MS2, MRS1-PS1-MS1, MRS1-PS2-MS1), des besagten empfangenen mindestens einen zweiten Funksignals (MRS2, MRS2-MS1, MRS2-MS2, MRS2-PS1-MS1, MRS2-PS2-MS2), des besagten empfangenen mindestens einen dritten Funksignals (MRS3), des besagten empfangenen mindestens einen vierten Funksignals (MRS4) und des besagten mindestens einen vordefinierten Funkfrequenzsignals (PS, PS1, PS2), und

- Mittel (SU-INT) zum Bereitstellen der besagten ausgewählten mindestens einen Übertragungskonfiguration (TC) an eine Übertragungseinheit (TU, TU1) der besagten mindestens einen Antennenanordnung (BS1-AS1, BS2-AS1).

13. Vorrichtung (AP) nach Anspruch 12, wobei die besagte Vorrichtung (AP) ein drahtloses Messgerät, ein drahtloses Prüfgerät oder ein Funknetzwerk-Scanner ist.

14. Übertragungseinheit (TU, TU1, TU2) mindestens einer Antennenanordnung (BS1-AS1, BS2-AS1), umfassend:

- Mittel (TU-TR, TU-INT1, TU-INT2) zum aufeinanderfolgenden Übertragen mindestens eines vordefinierten Funkfrequenzsignals (PS, PS1, PS2) von einem ersten und einem zweiten von mindestens zwei Antennenelementen (AE1, AE2, BS1-AE1, BS1-AE2, BS2-AE1, BS2-AE2) mindestens einer Antennenanordnung (BS1-AS1, BS2-AS1) an eine Empfangseinheit (RU, MS1, MS2, MS3, AP) und zum Übertragen des besagten mindestens einen vordefinierten Funkfrequenzsignals (PS, PS1, PS2) an die besagte Empfangseinheit (RU, MS1, MS2, MS3, AP) durch das aufeinanderfolgende Anwenden mindestens zweier Vorcodierungsvektoren mindestens eines Codebuchs auf das besagte erste und das besagte zweite der besagten mindestens zwei Antennenelemente (AE1, AE2, BS1-AE1, BS1-AE2, BS2-AE1, BS2-AE2), und

- Mittel zum Empfangen, von einer Auswahleinheit (SU, SU1, SU2, SU3, SU4, SU5), mindestens einer Übertragungskonfiguration (TC), welche an der besagten Auswahleinheit (SU, SU1, SU2, SU3, SU4, SU5) auf der Basis mindestens eines ersten Funksignals (MRS1, MRS1-MS1, MRS1-MS2, MRS1-PS1-MS1, MRS1-PS2-MS1), welches an der besagten Empfangseinheit (RU, MS1, MS2, MS3, AP) für das besagte über das besagte erste der besagten mindestens zwei Antennenelemente (AE1, AE2, BS1-AE1, BS1-AE2, BS2-AE1, BS2-AE2) übertragene vordefinierte Funkfrequenzsignal (PS, PS1, PS2) empfangen wurde, mindestens eines zweiten Funksignals (MRS2, MRS2-MS1, MRS2-MS2, MRS2-PS1-MS1, MRS2-PS2-MS2), welches an der besagten Empfangseinheit (RU, MS1, MS2, MS3, AP) für das besagte über das besagte zweite der besagten mindestens zwei Antennenelemente (AE1, AE2, BS1-AE1, BS1-AE2, BS2-AE1, BS2-AE2) übertragene mindestens eine vordefinierte Funkfrequenzsignal (PS, PS1, PS2) empfangen wurde, mindestens eines dritten Funksignals (MRS3), welches an der besagten Empfangseinheit (RU, MS1, MS2, MS3, AP) für das besagte über einen ersten der besagten mindestens zwei Vorcodierungsvektoren übertragene mindestens eine vordefinierte Funkfrequenzsignal (PS, PS1, PS2) empfangen wurde, mindestens eines vierten Funksignals (MRS4), welches an der besagten Empfangseinheit (RU, MS1, MS2, MS3, AP) für das besagte über mindestens einen zweiten der besagten mindestens zwei Vorcodierungsvektoren übertragene mindestens eine vordefinierte Funkfrequenzsignal (PS, PS1, PS2) empfangen wurde, und des besagten mindestens einen vordefinierten Funkfrequenzsignals (PS, PS1, PS2) ausgewählt wurde.

15. Eine Basisstation (BS1), umfassend eine Übertragungseinheit (TU, TU1) gemäß Anspruch 14.

## Revendications

1. Procédé (MET1) pour optimiser une transmission de liaison radio dans un système de radiocommunication (RCS1, RCS2, RCS3, RCS4), ledit procédé (MET1) comprenant les étapes suivantes :

transmettre (M1/1, M1/10) au moins un signal de radiofréquence prédéfini (PS, PS1, PS2) successivement à partir d'un premier et d'un deuxième parmi au moins deux éléments d'antenne (AE1, AE2, BS1-AE1, BS1-AE2, BS2-AE1, BS2-AE2) d'au moins un réseau d'antennes (BS1-AS1, BS2-AS1) à une unité de réception (RU) d'un appareil (AP),

- recevoir (M1/6) au niveau de ladite unité de réception (RU) au moins un premier signal radio pour ledit au moins un signal de radiofréquence prédéfini (PS, PS1, PS2) transmis par l'intermédiaire dudit premier parmi lesdits au moins deux éléments d'antenne (AE1, AE2, BS1-AE1, BS1-AE2, BS2-AE1, BS2-AE2),
- recevoir (M1/15) au niveau de ladite unité de réception (RU) au moins un deuxième signal radio pour ledit au moins un signal de radiofréquence prédéfini (PS, PS1, PS2) transmis par l'intermédiaire dudit deuxième parmi lesdits au moins deux éléments d'antenne (AE1, AE2, BS1-AE1, BS1-AE2, BS2-AE1, BS2-AE2),
- transmettre (M1/26, M1/27, M1/39, M1/40) ledit au moins un signal de radiofréquence prédéfini (PS, PS1, PS2) en appliquant successivement au moins deux vecteurs de précodage d'au moins un livre de code audit premier et audit deuxième parmi lesdits au moins deux éléments d'antenne (AE1, AE2, BS1-AE1, BS1-AE2, BS2-AE1, BS2-AE2) à ladite unité de réception (RU),
- recevoir (M1/28) au niveau de ladite unité de réception (RU) au moins un troisième signal radio pour ledit au moins un signal de radiofréquence prédéfini (PS, PS1, PS2) transmis par l'intermédiaire d'un premier parmi lesdits au moins deux vecteurs de précodage,
- recevoir (M1/41) au niveau de ladite unité de réception (RU) au moins un quatrième signal radio pour ledit au moins un signal de radiofréquence prédéfini (PS, PS1, PS2) transmis par l'intermédiaire d'au moins un deuxième parmi lesdits au moins deux vecteurs de précodage,
- fournir (M1/8, M1/17, M1/30, M1/43) ledit au moins un premier signal radio reçu (MRS1, MRS1-MS1, MRS1-MS2, MRS1-PS1-MS1, MRS1-PS2-MS1), ledit au moins un deuxième signal radio reçu (MRS2, MRS2-MS1, MRS2-MS2, MRS2-PS1-MS1, MRS2-PS2-MS2), ledit au moins un troisième signal radio reçu (MRS3) et ledit au moins un quatrième signal radio reçu (MRS4) à partir de ladite unité de réception (RU, MS1, MS2, MS3, AP) à une unité de sélection (SU, SU5) dudit appareil (AP),
- sélectionner (M1/45) au niveau de ladite unité de sélection (SU, SU5) au moins une configuration de transmission (TC) d'au moins deux configurations de transmission sur la base dudit au moins un premier signal radio reçu (MRS1, MRS1-MS1, MRS1-MS2, MRS1-PS1-MS1, MRS1-PS2-MS1), dudit au moins un deuxième signal radio reçu (MRS2, MRS2-MS1, MRS2-MS2, MRS2-PS1-MS1, MRS2-PS2-MS2), dudit au moins un troisième signal radio reçu (MRS3) et dudit au moins un quatrième signal radio reçu (MRS4) et dudit au moins un signal de radiofréquence prédéfini (PS, PS1, PS2), et
- fournir (M1/46) à partir de ladite unité de sélection (SU, SU5) ladite au moins une configuration de transmission (TC) sélectionnée à une unité d'émission (TU, TU1) dudit au moins un réseau d'antennes (BS1-AS1, BS2-AS1).

2. Procédé (MET1) selon la revendication 1, dans lequel ledit au moins un premier signal radio reçu (MRS1, MRS1-MS1, MRS1-MS2, MRS1-PS1-MS1, MRS1-PS2-MS1), ledit au moins un deuxième signal radio reçu (MRS2, MRS2-MS1, MRS2-MS2, MRS2-PS1-MS1, MRS2-PS2-MS2), ledit au moins un troisième signal radio reçu (MRS3) et ledit au moins un quatrième signal radio reçu (MRS4) sont fournis sous forme de trame OFDM reçue à partir de ladite unité de réception (RU, MS1, MS2, MS3, AP) à ladite unité de sélection (SU, SU1, SU2, SU3, SU4, SU5).

3. Procédé (MET1) selon la revendication 1 ou la revendication 2, dans lequel ledit au moins un premier signal radio reçu (MRS1, MRS1-MS1, MRS1-MS2, MRS1-PS1-MS1, MRS1-PS2-MS1), ledit au moins un deuxième signal radio reçu (MRS2, MRS2-MS1, MRS2-MS2, MRS2-PS1-MS1, MRS2-PS2-MS2), ledit au moins un troisième signal radio reçu (MRS3) et ledit au moins un quatrième signal radio reçu (MRS4) sont fournis sous forme d'échantillons I/Q à partir de ladite unité de réception (RU, MS1, MS2, MS3, AP) à ladite unité de sélection (SU, SU1, SU2, SU3, SU4, SU5).

4. Procédé (MET1) selon l'une quelconque des revendications précédentes, dans lequel ledit au moins un premier signal radio reçu (MRS1, MRS1-MS1, MRS1-MS2, MRS1-PS1-MS1, MRS1-PS2-MS1), ledit au moins un deuxième signal radio reçu (MRS2, MRS2-MS1, MRS2-MS2, MRS2-PS1-MS1, MRS2-PS2-MS2), ledit au moins un troisième signal radio reçu (MRS3) et ledit au moins un quatrième signal radio reçu (MRS4) sont fournis instantanément ou collectivement à un moment ultérieur à partir de ladite unité de réception (RU, MS1, MS2, MS3, AP) à ladite unité de sélection (SU, SU1, SU2, SU3, SU4, SU5).

5. Procédé (MET1) selon l'une quelconque des revendications précédentes, dans lequel lesdites au moins deux configurations de transmission sont lesdits au moins un livre de code et au moins un autre livre de code comprenant des ensembles différents de vecteurs de précodage ou dans lequel lesdites au moins deux configurations de transmission sont au moins deux vecteurs de précodage.

6. Procédé (MET1) selon l'une quelconque des revendications précédentes, dans lequel ledit au moins un signal de radiofréquence prédéfini (PS, PS1, PS2) est appliqué à au moins une unité de ressources radio dans une plage de fréquences et temporelle prédéfinie (PFTB).

7. Procédé (MET1) selon la revendication 6, dans lequel ledit au moins un signal de radiofréquence prédéfini (PS, PS1, PS2) est appliqué périodiquement à toutes les unités de ressources radio de ladite plage de fréquences et temporelle prédéfinie pendant une période prédéfinie (PFTB).

8. Procédé (MET1) selon la revendication 7, dans lequel ledit système de radiocommunication (RCS1, RCS2, RCS3, RCS4) est un réseau d'accès LTE et dans lequel les deux premiers symboles (S1, S2) d'un bloc de ressources physiques (PRB1) de ladite plage de fréquences et temporelle prédéfinie pendant une période prédéfinie (PFTB) transportent des données de commande et des données de référence (CRD), dans lequel les cinquième, huitième et douzième symboles (S5, S8, S12) dudit bloc de ressources physiques (PRB1) transportent des données de référence (RD) et dans lequel dans les symboles restants (S3, S4, S6, S7, S9, S10, S11, S13, S14) dudit bloc de ressources physiques (PRB1) lesdits signaux radio prédéfinis (PS) sont appliqués.

9. Procédé (MET1) selon la revendication 6, dans lequel ladite plage de fréquences et temporelle prédéfinie (PFTB) couvre tous les blocs de ressources physiques d'une plage de fréquences prédéfinie (PFR) allouée à un opérateur dudit système de radiocommunication (RCS1, RCS2, RCS3, RCS4).

10. Procédé (MET1) selon l'une quelconque des revendications précédentes, ledit procédé comprenant en outre les étapes suivantes :

- fournir (M1(8, M1/17, M1/30, M1/43) des informations sur l'emplacement (LOC-MRS1, LOC-MRS2, LOC-MRS3, LOC-MRS4) et/ou des informations de vitesse (VEL-MRS1, VEL-MRS2, VEL-MRS3, VEL-MRS4) pour lesdites étapes de réception (M1/6, M1/15, M1/28, M1/41) à partir de ladite unité de réception (RU, MS1, MS2, MS3, AP) à ladite unité de sélection (SU, SU1, SU2, SU3, SU4, SU5), et

- fournir (M1/46) à partir de ladite unité de sélection (SU, SU1, SU2, SU3, SU4, SU5) lesdites informations sur l'emplacement (TC-LOC) et/ou lesdites informations de vitesse (TC-VEL) pour ladite au moins une configuration de transmission (TC) sélectionnée à ladite unité d'émission (TU, TU1, TU2).

**11.** Procédé (MET1) selon la revendication 10, dans lequel ledit procédé (MET1) fournit une évaluation hors ligne desdites au moins deux configurations de transmission en suivant les sous-étapes suivantes :

- effectuer des mesures à différents emplacements et à différentes vitesses dans une cellule radio appartenant audit au moins un réseau d'antennes (BS1-AS1, BS2-AS1),
- mettre en mémoire tampon ledit au moins un premier signal radio reçu (MRS1, MRS1-MS1, MRS1-MS2, MRS1-PS1-MS1, MRS1-PS2-MS1), ledit au moins un deuxième signal radio reçu (MRS2, MRS2-MS1, MRS2-MS2, MRS2-PS1-MS1, MRS2-PS2-MS2), ledit au moins un troisième signal radio reçu (MRS3) et ledit au moins un quatrième signal radio reçu (MRS4) au niveau de ladite unité de réception (RU), et
- connecter ladite unité de réception (RU) à ladite unité de sélection (SU) au moyen d'un câble de données, et dans lequel dans ladite étape de fourniture (M1/46) ledit premier signal radio mis en mémoire tampon et reçu (MRS1, MRS1-MS1, MRS1-MS2, MRS1-PS1-MS1, MRS1-PS2-MS1), ledit au moins un deuxième signal radio mis en mémoire tampon et reçu (MRS2, MRS2-MS1, MRS2-MS2, MRS2-PS1-MS1, MRS2-PS2-MS2), ledit au moins un troisième signal radio mis en mémoire tampon et reçu (MRS3) et ledit au moins un quatrième signal radio mis en mémoire tampon et reçu (MRS4) sont transmis par l'intermédiaire dudit câble de données connecté après l'achèvement desdites mesures.

**12.** Appareil (AP) comprenant :

- une unité de réception (RU) pour recevoir successivement au moins un premier signal radio (MRS1, MRS1-MS1, MRS1-MS2, MRS1-PS1-MS1, MRS1-PS2-MS1) d'une transmission d'au moins un signal de radiofréquence prédéfini (PS, PS1, PS2) par l'intermédiaire d'un premier parmi au moins deux éléments d'antenne (AE1, AE2, BS1-AE1, BS1-AE2, BS2-AE1, BS2-AE2) d'au moins un réseau d'antennes (BS1-AS1, BS2-AS1) et au moins un deuxième signal radio (MRS2, MRS2-MS1, MRS2-MS2, MRS2-PS1-MS1, MRS2-PS2-MS2) d'une transmission dudit au moins un signal de radiofréquence prédéfini (PS, PS1, PS2) par l'intermédiaire d'un deuxième parmi lesdits au moins deux éléments d'antenne (AE1, AE2, BS1-AE1, BS1-AE2, BS2-AE1, BS2-AE2) dudit au moins un réseau d'antennes (BS1-AS1, BS2-AS1), pour recevoir successivement au moins un troisième signal radio (MRS3) d'une transmission dudit au moins un signal de radiofréquence prédéfini (PS, PS1, PS2) en appliquant un premier parmi au moins deux vecteurs de précodage d'au moins un livre de code audit premier et audit deuxième parmi lesdits au moins deux éléments d'antenne (AE1, AE2, BS1-AE1, BS1-AE2, BS2-AE1, BS2-AE2) et au moins un quatrième signal radio (MRS4) d'une transmission dudit au moins un signal de radiofréquence prédéfini (PS, PS1, PS2) en appliquant un deuxième parmi lesdits au moins deux vecteurs de précodage dudit au moins un livre de code audit premier et audit deuxième parmi lesdits au moins deux éléments d'antenne (AE1, AE2, BS1-AE1, BS1-AE2, BS2-AE1, BS2-AE2), et pour fournir ledit au moins un premier signal radio reçu (MRS1, MRS1-MS1, MRS1-MS2, MRS1-PS1-MS1, MRS1-PS2-MS1), ledit au moins un deuxième signal radio reçu (MRS2, MRS2-MS1, MRS2-MS2, MRS2-PS1-MS1, MRS2-PS2-MS2), ledit au moins un troisième signal radio reçu (MRS3) et ledit au moins un quatrième signal radio reçu (MRS4) à une unité de sélection (SU, SU5),
- ladite unité de sélection (SU, SU5) pour sélectionner au moins une configuration de transmission (TC) d'au moins deux configurations de transmission sur la base dudit au moins un premier signal radio reçu (MRS1, MRS1-MS1, MRS1-MS2, MRS1-PS1-MS1, MRS1-PS2-MS1), dudit au moins un deuxième signal radio reçu (MRS2, MRS2-MS1, MRS2-MS2, MRS2-PS1-MS1, MRS2-PS2-MS2), dudit au moins un troisième signal radio reçu (MRS3) et dudit au moins un quatrième signal radio reçu (MRS4) et dudit au moins un signal de radiofréquence prédéfini (PS, PS1, PS2), et
- moyens (SU-INT) pour fournir ladite au moins une configuration de transmission (TC) sélectionnée à une unité d'émission (TU, TU1) dudit au moins un réseau d'antennes (BS1-AS1, BS2-AS1).

**13.** Appareil (AP) selon la revendication 12, dans lequel ledit appareil (AP) est un équipement de mesure sans fil, un équipement de test sans fil ou un dispositif de balayage de réseau radio.

**14.** Unité d'émission (TU, TU1, TU2) d'au moins un réseau d'antennes (BS1-AS1, BS2-AS1) comprenant :

- moyens (TU-TR, TU-INT1, TU-INT2) pour transmettre à une unité de réception (RU, MS1, MS2, MS3, AP) au moins un signal de radiofréquence prédéfini (PS, PS1, PS2) successivement à partir d'un premier et d'un deuxième parmi au moins deux éléments d'antenne (AE1, AE2, BS1-AE1, BS1-AE2, BS2-AE1, BS2-AE2) dudit au moins un réseau d'antennes (BS1-AS1, BS2-AS1) et pour transmettre ledit au moins un signal de radiofréquence prédéfini (PS, PS1, PS2) à ladite unité de réception (RU, MS1, MS2, MS3, AP) en appliquant successivement au moins deux vecteurs de précodage d'au moins un livre de code audit premier et audit deuxième parmi lesdits au moins deux éléments d'antenne (AE1, AE2, BS1-AE1, BS1-AE2, BS2-AE1, BS2-AE2), et

- moyens pour recevoir à partir d'une unité de sélection (SU, SU1, SU2, SU3, SU4, SU5) au moins une configuration de transmission (TC) sélectionnée au niveau de ladite unité de sélection (SU, SU1, SU2, SU3, SU4, SU5) sur la base d'au moins un premier signal radio (MRS1, MRS1-MS1, MRS1-MS2, MRS1-PS1-MS1, MRS1-PS2-MS1) reçu au niveau de ladite unité de réception (RU, MS1, MS2, MS3, AP) pour ledit au moins un signal de radiofréquence prédéfini (PS, PS1, PS2) transmis par l'intermédiaire dudit premier parmi lesdits au moins deux éléments d'antenne (AE1, AE2, BS1-AE1, BS1-AE2, BS2-AE1, BS2-AE2), d'au moins un deuxième signal radio (MRS2, MRS2-MS1, MRS2-MS2, MRS2-PS1-MS1, MRS2-PS2-MS2) reçu au niveau de ladite unité de réception (RU, MS1, MS2, MS3, AP) pour ledit au moins un signal de radiofréquence prédéfini (PS, PS1, PS2) transmis par l'intermédiaire dudit deuxième parmi lesdits au moins deux éléments d'antenne (AE1, AE2, BS1-AE1, BS1-AE2, BS2-AE1, BS2-AE2), d'au moins un troisième signal radio (MRS3) reçu au niveau de ladite unité de réception (RU, MS1, MS2, MS3, AP) pour ledit au moins un signal de radiofréquence prédéfini (PS, PS1, PS2) transmis par l'intermédiaire d'un premier parmi lesdits au moins deux vecteurs de précodage, d'au moins un quatrième signal radio (MRS4) reçu au niveau de ladite unité de réception (RU, MS1, MS2, MS3, AP) pour ledit au moins un signal de radiofréquence prédéfini (PS, PS1, PS2) transmis par l'intermédiaire d'au moins un deuxième parmi lesdits au moins deux vecteurs de précodage et dudit au moins un signal de radiofréquence prédéfini (PS, PS1, PS2).

**15.** Station de base (BS1) comprenant une unité d'émission (TU, TU1) selon la revendication 14.

*FIG. 1*

RCS2

BS2-AS1

BS2-AE1

PS2

BS2-AE2

C2

TP1-2

TP1

PS1

BS1-AE1

BS1-AS1

BS1-AE2

MRS1-PS1-MS1,
MRS2-PS1-MS1,
MRS1-PS2-MS1,
MRS2-PS2-MS1

MS1

C1

CL

TU2

SU2

PS2

BS2

TU1

TC1

SU1

TC2

BS1

*FIG. 2*

FIG. 3

FIG. 4

EP 2 592 764 B1

FIG. 5a

FIG. 5b

*FIG. 6*

EP 2 592 764 B1

SU

SU-CPU

SU-PROG

SU-INT

SU-MEM

*FIG. 7*

EP 2 592 764 B1

TU

TU-INT1   TU-INT2

TU-TR

TU-CPU

TU-MEM ———

TU-PROG

*FIG. 8*

## REFERENCES CITED IN THE DESCRIPTION

### Patent documents cited in the description

- US 20100172256 A1
- WO 2008147121 A1
- EP 1909407 A1
- WO 2008116181 A2
- US 20110032839 A1
- WO 2010124252 A2
- US 20110274188 A1